# EUROPEAN PATENT APPLICATION

(11) **EP 2 000 918 A1**
(43) Date of publication of application: **10.12.2008**
(21) Application number: 07737974.1
(22) Date of filing: 07.03.2007
(51) Int. Cl.: G06F 13/00, H04L 12/46, H04N 7/173

(54) **INFORMATION PROCESSING DEVICE, INFORMATION PROCESSING METHOD, AND COMPUTER PROGRAM**

(30) Priority: 07.03.2006 JP 2006061230
(71) Applicant: Sony Corporation, Minato-ku Tokyo 108-0075 (JP)
(72) Inventor: IGARASHI, Tatsuya, Tokyo 1080075 (JP)
(74) Representative: Merryweather, Colin Henry
(86) International application number: PCT/JP2007/054461
(87) International publication number: WO 2007/105568

(57) **Abstract**

A configuration is provided in which a device within a home network receives and plays back content from a server that is located outside the home network. A home IMS gateway maps the external server located outside the home network as a virtual home network device, and executes reception of a content provision service provided by the external server through application of the mapping information. Further, at the time of executing switching processing of channels that provide content provided by the external server, the home IMS gateway executes termination of an inactive channel that occurs due to the channel switching.

## Description

### Technical Field

The present invention relates to an information processing apparatus and an information processing method, and a computer program. More specifically, the present invention relates to an information processing apparatus and an information processing method, and a computer program which realize use of data supplied from outside a home network by devices within the home network.

### Background Art

With the proliferation of PCs and digital household electric appliances, interconnecting these devices via a home IP (Internet Protocol) network to share and enjoy digital content such as video, audio, and photographs is becoming a reality. For example, the DLNA (Digital Living Network Alliance) defines technical specifications and implementation guidelines necessary for sharing digital content by those digital appliances to allow connectivity between devices of different vendors. These specifications and guidelines have become the industry standards for home IP networks.

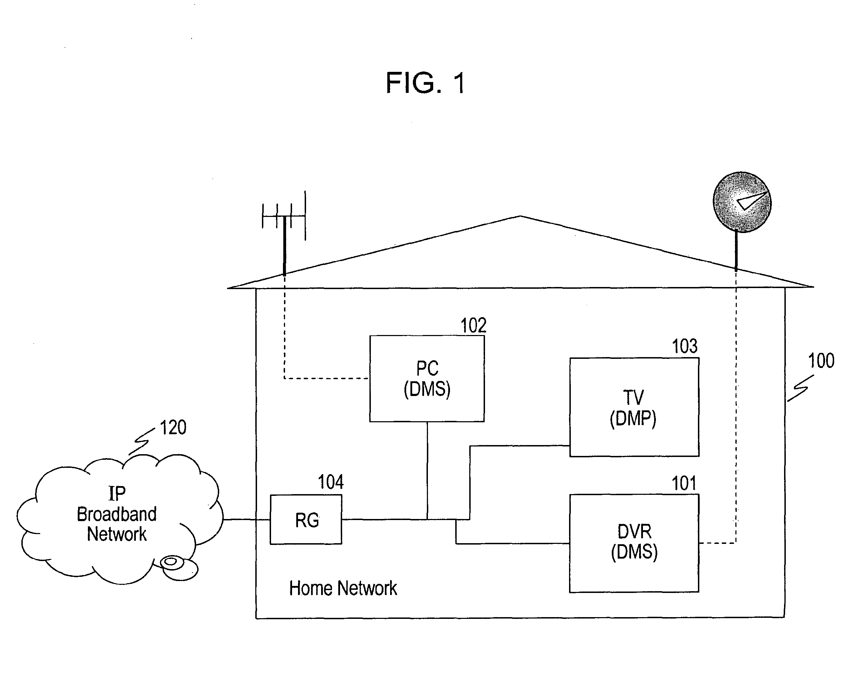

Fig. 1 shows an example of a home network 100 proposed by the DLNA. A DVR (Digital Video Recorder) as a digital video content recording apparatus 101, and a PC 102 with a built-in TV tuner can receive satellite/terrestrial analog and digital broadcasting, and record and store broadcast programs onto a built-in hard disk recorder. According to the DLNA, a device that accumulates content and provides content to devices within a home network is referred to as a digital media server (DMS: Digital Media Server). In Fig. 1, the DVR 101 and the PC 102 are DMSs.

A DMS can perform streaming of video content such as TV programs recorded on a hard disk, for example, to a digital media player (DMP: Digital Media Player) connected to the DMS via the home IP network. The digital media player (DMP) is a device that receives content from the DMS for playback.

In the example of Fig. 1, the DMP is implemented on a TV 103. The user operates the TV 103 by using, for example, an infrared remote control of the TV 103, thus enabling playback of video content accumulated in the PC 102 or the DVR 101 placed in a remote room. While a residential gateway (RG: Residential Gateway) 104 is used as a network connecting device when a device within a household connects to an IP broadband network 120 as the Internet, in the use cases of the DLNA, the RG 104 is used as a bridge for a device within a household to establish IP connection.

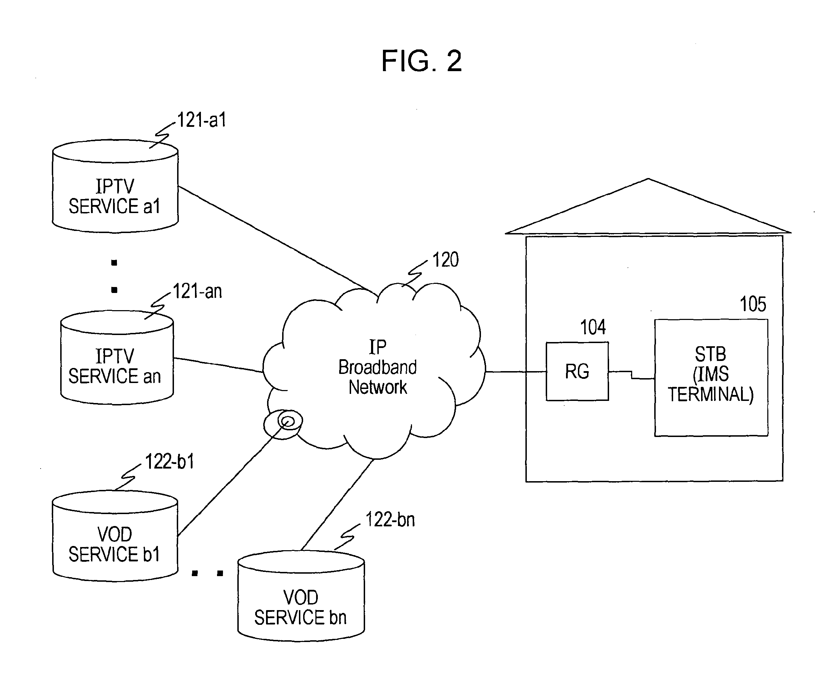

On the other hand, changes are also being observed in broadcasting systems. Commercialization is underway for IPTV services, VOD (Video On Demand) services, and the like in which video content that have been traditionally broadcast by using terrestrial or satellite waves are transmitted via an IP broadband network. Fig. 2 is a conceptual diagram of an IPTV/VOD service.

An STB (Set Top Box) 105 is installed within a household, and can receive content based on services provided from various IPTV service-providing servers 121a1 to 121an and VOD service-providing servers 122b1 to 122bn, via the RG (Residential Gateway) 104. The STB (Set Top Box) 105 has such functions as a function of receiving video information, and a function of executing applications required for command transmission/reception, MREG decoding, and playback of received data.

Depending on the case, the residential gateway (RG) 104 receives services (contents) provided by the plurality of IPTV service-providing servers 121 or VOD service-providing servers 122 via the same operator, for example, the same access line provider such as a telephone company or a Cable TV company, or receives respective services individually. It should be noted, however, that the STB (Set Top Box) 105 used by the user itself must be configured as a system that is compatible with the IPTV service to which it connects.

As such IPTV services or VOD services become more widespread in the years to come, there will be a users' demand for the ability to use video content provided by the IPTV service on a DLNA device, in the same way that TV broadcast content as standard broadcast is shared for viewing and listening on a DLNA device in the related art.

Examples of conceivable solutions to meet such a demand include a method in which video content from an IPTV service is downloaded onto a device with a large capacity hard disk such as a home server to be shared within a home network, and a method in which the protocol, media format, or the like of the IPTV service is converted into the protocol or media format of a DLNA device by a residential gateway (RG) and provided to a home network connecting device. A module with a built-in home network which executes format conversion processing is described in Patent Document 1.

However, the former method requires download time for temporary storage of content on the home server, and hence it is difficult for the users to enjoy video whenever they like, which makes the method not suitable for live viewing and listening. The latter method in which processing is performed by the residential gateway (RG) requires the residential gateway (RG) to perform protocol/media format conversion. High-performance hardware is thus required, and also software becomes complex, which drives up the cost of the RG.

An RG is typically supplied from broadband network access line providers (such as a telephone company). This presents an obstacle to offering IPTV services on the open Internet due to such reasons that the IPTV services available to the user are limited to those of the vendors provided by the access lines. Although it is possible to provide a new gateway device in the home IP network separately from the residential gateway (RG), in this case, depending on the network topology, overlapping transmissions of content streaming data may occur in the home network, resulting in wasted bandwidth within the home network.

An example of connection between a DLNA device in the home network and a content distribution service on the Internet is provided by the Viiv (registered trademark) technology developed by Intel Co., U.S.A.. Viiv is designed as a platform for PC hardware or software, and is aimed at allowing content from the Internet to be streamed for viewing and listening on the PC by means of a Dual Core high-performance CPU. At the same time, ViiV also has a DLNA function, and serves as a DLNA media server (DLNA Media Server) for streaming content that has been temporarily downloaded to the PC from the Internet to another DLNA device connected to the home network.
Patent Document 1: PCT Japanese Translation Patent Publication No. 2005-531231

### Disclosure of the Invention

### Problem to be solved by the Invention

As described above, when content provided by the IPTV service or VoD service is to be used on a DLNA device in the same manner as TV broadcast content as standard broadcast, in the home network configuration of the related art, it is necessary to download content in advance to a digital media server (DMS) such as a PC or DVR within the home network, or provide the residential gateway (RG) with a protocol/media format conversion function. The former method lacks in real-time capability, and hence is not suitable for streaming playback processing or the like, whereas the latter method results in an increase in cost.

The present invention has been made in view of the above-mentioned problems. Accordingly, it is an object of the present invention to provide an information processing apparatus, an information processing method, and a computer program which allow content provided by an external server located outside a home network such as an IPTV service to be viewed and listened to on an existing DLNA device, for example, in an open Internet connection environment that does not depend on infrastructure such as an internet access line or gateway.

### Means for solving the Problem

According to a first aspect of the present invention, there is provided an information processing apparatus including: a communication section that executes communication processing via a home network; and a data processing section that executes reception processing of a content provision service provided by an external server through application of mapping information that sets the external server located outside the home network as a virtual home network device, wherein the data processing section is configured to execute termination processing of an inactive channel that occurs due to channel switching at the time of executing switching processing of channels that provide content provided by the external server.

In an embodiment of the information processing apparatus according to the present invention, the data processing section is configured to execute a process of transmitting an IGMP leave (IGMP leaving) message to the external server or a management server as a message according to IGMP (Internet Group Management Protocol) if the terminated channel is for multicast distributed content.

In an embodiment of the information processing apparatus according to the present invention, the data processing section is configured to execute a process of converting an HTTP request for a channel change from a DLNA (Digital Living Network Alliance) device into IGMP (Internet Group Management Protocol).

In an embodiment of the information processing apparatus according to the present invention, the data processing section is configured to execute a process of acquiring a content list corresponding to a channel selected in accordance with a provided profile on the basis of provision of a user profile or a client profile to the external server, in a process of receiving from the external server a content list corresponding to content that can be provided by the external server.

In an embodiment of the information processing apparatus according to the present invention, the data processing section is configured to execute SIP message transmission according to SIP (Session Initiation Protocol) if channel switching accompanies switching of service providers, and not to execute SIP message transmission in the case of channel switching for content provided by the same service provider.

According to a second aspect of the present invention, there is provided an information processing method executed by an information processing apparatus, including: a communication step of causing a communication section to execute communication processing via a home network; a content receiving step of causing a data processing section to execute reception processing of a content provision service provided by an external server through application of mapping information that sets the external server located outside the home network as a virtual home network device; and a channel controlling step of causing the data processing section to execute termination processing of an inactive channel that occurs due to channel switching at the time of executing switching processing of channels that provide content provided by the external server.

In an embodiment of the information processing method according to the present invention, the channel controlling step includes a step of executing a process of transmitting an IGMP leave (IGMP leaving) message to the external server or a management server as a message according to IGMP (Internet Group Management Protocol) if the terminated channel is for multicast distributed content.

In an embodiment of the information processing method according to the present invention, the channel controlling step includes a step of executing a process of converting an HTTP request for a channel change from a DLNA (Digital Living Network Alliance) device into IGMP (Internet Group Management Protocol).

In an embodiment of the information processing method according to the present invention, the data processing section is configured to further execute a process of acquiring a content list corresponding to a channel selected in accordance with a provided profile on the basis of provision of a user profile or a client profile to the external server, in a process of receiving from the external server a content list corresponding to content that can be provided by the external server.

In an embodiment of the information processing method according to the present invention, the channel controlling step executes SIP message transmission according to SIP (Session Initiation Protocol) if channel switching accompanies switching of service providers, and does not to execute SIP message transmission in the case of channel switching for content provided by the same service provider.

According to a third aspect of the present invention, there is provided a computer program for causing an information processing apparatus to execute information processing, including: a communication step of causing a communication section to execute communication processing via a home network; a content receiving step of causing a data processing section to execute reception processing of a content provision service provided by an external server through application of mapping information that sets the external server located outside the home network as a virtual home network device; and a channel controlling step of causing the data processing section to execute termination processing of an inactive channel that occurs due to channel switching at the time of executing switching processing of channels that provide content provided by the external server.

It should be noted that the computer program according to the present invention is a computer program that can be provided with respect to a general-purpose computer capable of executing a variety of program codes via a storage medium or communication medium that is provided in a computer-readable format. By providing such a program in a computer-readable format, processing corresponding to that program is realized on the computer system.

Other objects, features, and advantages of the present invention will become apparent from the following detailed description of embodiments of the present invention and the accompanying drawings. It should be noted that the term system as used in this specification refers to a logical assembly of a plurality of devices, and is not limited to one in which respective component devices are located within the same casing.

### Advantages

According to the configuration of the present invention, DMP as a content playback apparatus that is a client device within the home network can receive and play back content from a content providing server that is located outside the home network. That is, the home IMS gateway as the information processing apparatus according to the present invention executes communication with the content providing server, maps the content providing server as a virtual home network device, and upon reception of a device discovery request from a content playback apparatus within the home network, provides server information of the content providing server to the content playback device as device information indicative of a device from which services can be received. Further, at the time of executing switching processing of channels that provide content provided by an external server, it is possible to execute termination processing of an inactive channel that occurs due to the channel switching.

### Brief Description of the Drawings

Fig. 1 is a diagram showing an example of a home network proposed by DLNA.
Fig. 2 is a conceptual diagram of an IPTV/VOD service.
Fig. 3 is a diagram illustrating an example of the configuration of an information communication system according to the present invention.
Fig. 4 is a diagram illustrating the functional components of the DLNA guidelines to which a DLNA device conforms.
Fig. 5 is a diagram showing the hardware configuration of a home IMS gateway.
Fig. 6 is a diagram illustrating an example of the configuration of the software module of a home IMS gateway.
Fig. 7 is a diagram illustrating the sequence of an AS (IPTV) subscription procedure.
Fig. 8 is a diagram illustrating the sequence of an AS (IPTV) subscription procedure.
Fig. 9 is a diagram illustrating an example of the usage sequence of content provided by AS (IPTV).
Fig. 10 is a diagram illustrating an example of the usage sequence of content provided by AS (IPTV).
Fig. 11 is a diagram illustrating the general overview of data communication in a content usage process.
Fig. 12 is a diagram illustrating an example of the configuration of the software module of a home IMS gateway.
Fig. 13 is a diagram illustrating an example of the usage sequence of content provided by AS (IPTV).
Fig. 14 is a diagram illustrating a service screen provided by AS (IPTV) and an example of screen display at the time of streaming playback processing.
Fig. 15 is a diagram illustrating the functional components of an IPTV terminal function as a function necessary for receiving IPTV services.
Fig. 16 is a diagram illustrating CSCF, HSS, and AS as the main functions of IMS (IP Multimedia Subsystem).

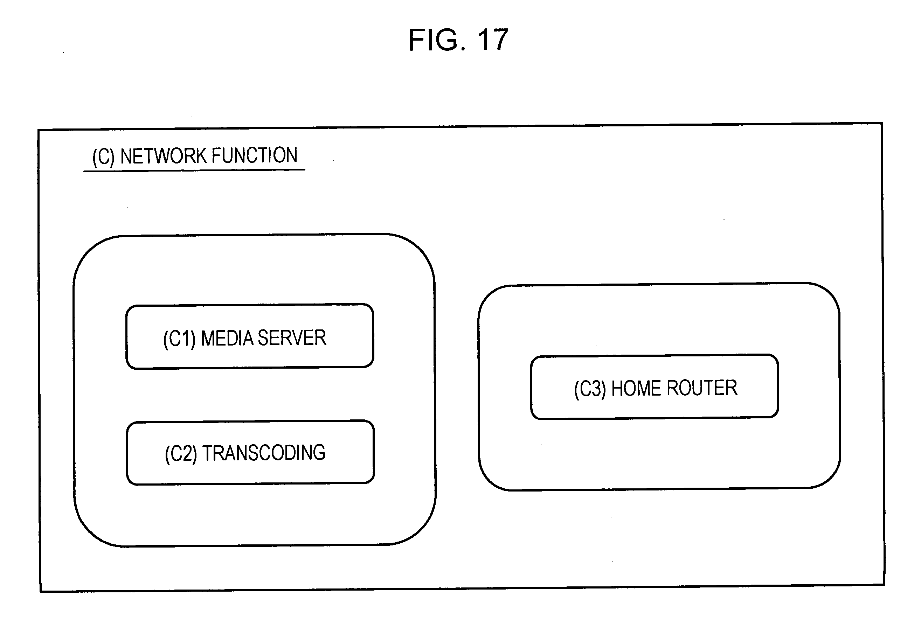

Fig. 17 is a diagram illustrating functions used in a network configuration for receiving IPTV services by a device within a home network.
Fig. 18 is a diagram illustrating quality management processing for communication data.
Fig. 19 is a diagram illustrating a communication sequence executed for receiving IPTV services by a client.
Fig. 20 is a diagram illustrating a communication sequence executed for receiving IPTV services by a client.
Fig. 21 is a diagram illustrating a communication sequence executed for receiving IPTV services by a client.
Fig. 22 is a diagram illustrating a communication sequence executed for receiving IPTV services by a client.
Fig. 23 is a diagram illustrating a communication sequence executed for receiving IPTV services by a client.
Fig. 24 is a diagram illustrating a network connection processing sequence for a client to receive IPTV services.
Fig. 25 is a diagram illustrating a network connection processing sequence for a client to receive IPTV services.
Fig. 26 is a diagram illustrating a network connection processing sequence for a client to receive IPTV services. Best Mode for Carrying Out the Invention

Hereinbelow, an information processing apparatus and an information processing method, and a computer program according to the present invention will be described in detail with reference to the drawings. The description will be given in the following order of topics.
1. Configuration for Reception of IPTV Services by Device within Home Network
2. Description of Functions Applied to IPTV Services
3. Specific Processing Example of IPTV Services
   3-1. Specific Processing Example of Communication Processing
   3-2. Specific Processing Example of Various Services

### [1. Configuration for Reception of IPTV Services by Device within Home Network]

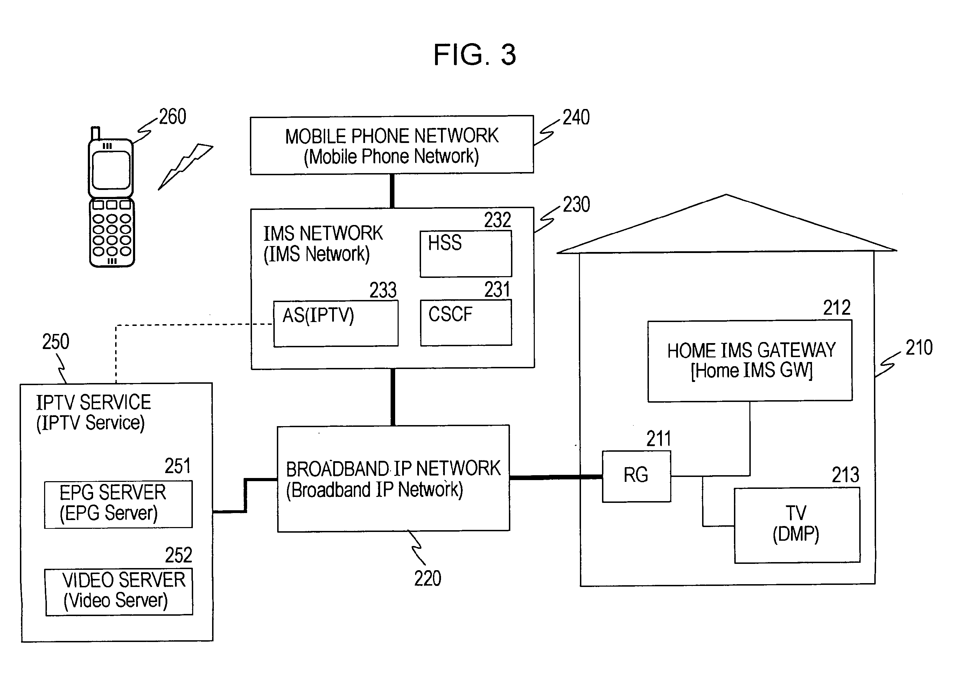

First, referring to Fig. 3, an example of the configuration of an information communication system according to the present invention will be described. While IPTV service systems have been developed and commercialized by various vendors such as Microsoft USA, in this embodiment, description will be directed to the case of using an IPTV service architecture which uses an IP multimedia subsystem (IMS: IP Multimedia Subsystem).

IMS is originally developed by the 3GPP (3rd Generation Partnership Project) that is a standardization project for third generation mobile communication systems, as the basic technology for providing, for example, push-to-talk (push to talk) conference systems that realize conversation between more than three mobile phones, communications such as instant messages, and multimedia add-on services in voice-based telephone services in the wireless communication infrastructure for mobile phones.

IMS is based on the IP technology, and highly compatible with the Internet infrastructure of a fixed communication system. Meanwhile, there is a trend called FMC (Fixed Mobile Convergence) for integrating wired and wireless communication network infrastructures by IP. In the light of this trend, the IPTV system using IMS has been attracting attention.

With a functional element called CSCF (Call Session Control Function) based on SIP (Session Initiation Protocol) specified by RFC-3261 of the IETF (The Internet Engineering Task Force) at its core, the IMS is configured by such functional elements as a home subscriber subsystem (HSS: Home Subscriber Subsystem) and an application server (AS: Application Server).

An IMS network 230 shown in Fig. 3 has a CSCF 231, an HSS 232, and an AS (IPTV) 233 as these functional elements. The IMS network 230 provides services with respect to a mobile phone 260 via a mobile phone network 240.

The CSCF 231 performs user registration and session set-up control on the basis of SIP (Session Initiation Protocol). Further, the CSCF 231 executes activation of necessary service processing in accordance with user profile setting registered in the HSS 232. The HSS 232 has a database for the management of user IDs used in the IMS, the management of the profile of services to which each user subscribes, the management of authentication information, the management as to whether or not each IMS service can be used, and user movement management. The AS 233 is a server that executes each individual service processing, and is activated by the CSCF 231 in accordance with the service subscription status of each user to provide services to the user.

As described above, in the IMS, a terminal for which the user ID is set makes access to the CSCF 231 to perform terminal registration and session set-up control, and performs activation of necessary services in accordance with the user profile setting registered in the HSS 232. The ASS 233 actually performs each individual service processing.

For instance, a representative example of services using IMS is "Push to Talk". According to "Push to Talk", the user terminal connects to the application server (AS: Application Server) in the IMS network 230 which executes the "Push to Talk" service, and establishes sessions with a plurality of members from the AS with respect to registered group members, a phone conversation between the members being performed via a relay server using VoIP (Voice Over IP).

For the IPTV viewing and listening service, the AS of the IPTV service set in the IMS network 230 is used. The AS (IPTV) 233 shown in Fig. 3 corresponds to the AS executing this IPTV service. In actuality, the AS (IPTV) 233 executes services with respect to the user terminal in corporation with an IPTV service (IPTV Service) executing entity, that is, an IPTV service 250 as a content providing entity.

The IPTV service 250 has an EPG server 251, which is a server providing EPG (Electronic Program Guide) as a program information guide such as a content list, and a video server 252 that is a server providing video content. The content list provision service and content provision service with respect to the user terminal are realized through cooperation between the respective servers and the AS (IPTV) 233 of the IMS network 230.

In the system according to the present invention, as its basic configuration, a home network 210 is constituted by the home network of the related art described with reference to Figs. 1 and 2, that is, an existing DLNA (Digital Living Network Alliance) device. Fig. 3 shows a residential gateway (RG: Residential Gateway) 211 as a network connecting device through which a device within the home network connects to an IP broadband network 221 and which is used as a bridge, a home IMS gateway 212 that executes processing with respect to a device within the home network 210 (for example, a content playback apparatus such as a TV (DMP) 213) to enable use of services provided by a server that is located outside the home network, and the TV 213 as a digital media player (DMP: Digital Media Player) that is a client device that receives and plays back content.

A broadband IP network 220 is a network such as the , Internet that allows mutual communication between the IPTV 250, the IMS network 230, the home network 210, and the like.

In the system according to the present invention, the home IMS gateway 212 is set as the terminal that receives services of the IMS network. The IMS user ID is set for the home IMS gateway 212. That is, the user ID and user profile of the home IMS gateway 212 are registered in the home subscriber subsystem (HSS) 232 of the IMS network 230.

The home IMS gateway 212 receives IPTV services by executing the same processing as that performed when the mobile phone 260 executes IPTV services. That is, the home IMS gateway 212 makes access to the CSCF 231 to perform terminal registration and session set-up control, and performs activation of necessary services in accordance with the setting of the user profile registered in the HSS 232, thus performing reception of services using the AS (IPTV) 233. In addition to such a function of connecting to services of the IMS, the home IMS gateway 212 executes a gateway function for a DLNA device, for example, the TV (DMP) 213 shown in the drawing to access video content provided by the IPTV service 250. That is, the home IMS gateway 212 retains the following functions.
(a) Connecting Function with Services of IMS
(b) Gateway Function
These functions are realized by a network communication function, a basic information processing apparatus configuration, and software. The home IMS gateway 212 can be implemented in various devices connected to an existing home IP network which has a network communication function.

In the case where the home IMS gateway 212 executes the processing of relaying video content provided by the IPTV service 250 to a DLNA device, for example, the TV (DMP) 213 shown in the drawing, the home IMS gateway 212 further includes:

### (c) DMS Function as Function executing Content Provision Processing.

It should be noted, however, that this function is not absolutely necessary. It is also possible to adopt a configuration in which content transmission/reception is executed not via the home IMS gateway 212 but through communication between DMP as a DLNA device and an external server, in which case the home gateway 212 is not required to have the DMS function. Specific processing configuration for this will be described later.

By setting the home IMS gateway 212 having an IMS-network-service receiving function within the home network, an existing DLNA device (for example, the TV (DMP) 213 shown in the drawing) can receive video content of the IPTV through substantially the same processing as when receiving the provision of content from the DMS within the home network, that is, the home IMS gateway 212.

The TV (DMP) 213 as a client device within the home network can execute IPTV services executed as content provision processing from a device that is located outside the home network, through the same content usage processing as when receiving provision of content from the DMS within the home network, that is, the home IMS gateway 212.

The home IMS gateway 212 implements a DMS (Digital Media Server) function as a content providing server in a DLNA device. Access is made to the home IMS gateway 212 from the TV 213 in which the DMP (Digital Media Player) is implemented, and the IMS gateway 212 can provide IPTV services received via the IMS network 230 to the TV 213.

As described above, the home IMS gateway 212 can be implemented in various devices connected to an existing home IP network which has a network communication function. For example, the IMS-network-service receiving function can be implemented in a residential gateway (RG: Residential Gateway) supplied from an access line vendor of a telephone company or cable TV company as a network line provider. In this case, the RG 211 and the home IMS gateway 212 shown in Fig. 3 are integrated together.

Alternatively, in the home network configuration of the related art described above with reference to Fig. 1, the IMS-network-service receiving function can be implemented in the DVR (Digital Video Recorder) or PC that functions as a Digital Media Server (DMS) as a device performing content provision.

As described above, according to the configuration of the present invention, the device in which the IMS-network-service receiving function can be implemented is not limited, thus allowing adaptation to IPTV services on the open Internet. Further, the network topology is not limited either, thus allowing adaptation to any arbitrary network configuration.

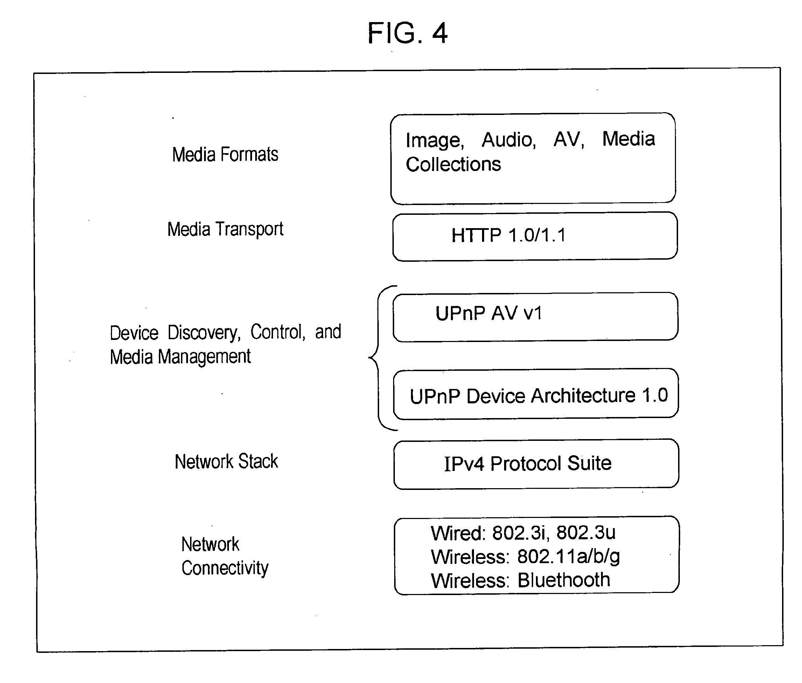

Hereinbelow, detailed description will be given of an example of the configuration of a home IMS gateway and reception of IPTV services using the home IMS gateway.
First, prior to the description of the home IMS gateway, description will be given of functional components of the DLNA guidelines to which a DLNA device conforms, with reference to Fig. 4.

Fig. 4 shows the functional components of the DLNA guidelines. The following layers are defined from the top: a media format layer (Media Format); a media transport layer (Media Transport); a device discovery control and media management layer (Device Discovery Control and Media Management); a network layer (Network Stack); and a network connectivity layer (Network Connectivity). A device within the home network (DLNA device) executes data communication according to a network protocol that conforms to the guideline of DLNA (Digital Living Network Alliance), in accordance with the basic components shown in Fig. 4.

First, Network Connectivity at the lowermost layer specifies the physical layer/link layer of the home network. While a communication function according to the IEEE802.3u, 802.211a/b/g standard is implemented in the DLNA device, the communication standard is not limited as far as the home network infrastructure is configured so as to allow IP connection such as PLC (Power line communication).

The protocol of IPv4 is used for the network layer, and each DLNA device performs communication by using TCP, UDP. UPnP (registered trademark) Device Architecture 1.0 specified in the device discovery control and media management layer specifies SSDP (Simple Service Discovery Protocol) for device discovery, SOAP (Simple Object Access Protocol) for performing control, and the like. UPnP AV is implemented on top of UPnP DA (UPnP Device Architecture). While UPnP AV version 1 specifies a UPnP media server (UPnP Media Server) and a UPnP media renderer (UPnP Media Renderer), the DMS as a DLNA-specified content providing server implements the UPnP media server (UPnP Media Server), and the DMP as a DLNA-specified content playback device implements a controller for the UPnP media server (UPnP Media Server).

Main content directory service (Content Directory Service) is implemented in the UPnP media server (UPnP Media Server), and the content list and metadata acquisition method is provided. By using the content directory service (Content Directory Service), the DMP as a DLNA-specified content playback device performs acquisition of the list of content to be streamed from the DMS as a DLNA-specified content providing server.

The media transport (Media Transport) layer as the next higher layer specifies that HTTP1.0/1.1 be used for streaming playback. As for the media format, it is specified that in the case of video content, contents of Media Formats according to the profile of MPEG2-PS specified by the DLNA are transported by streaming from the DMS to the DMP. The DMP as a DLNA-specified content playback device sequentially decodes and plays back the MPEG2-PS data that has been received by streaming transmission, for example, thereby allowing the user to view or listen to the contents.

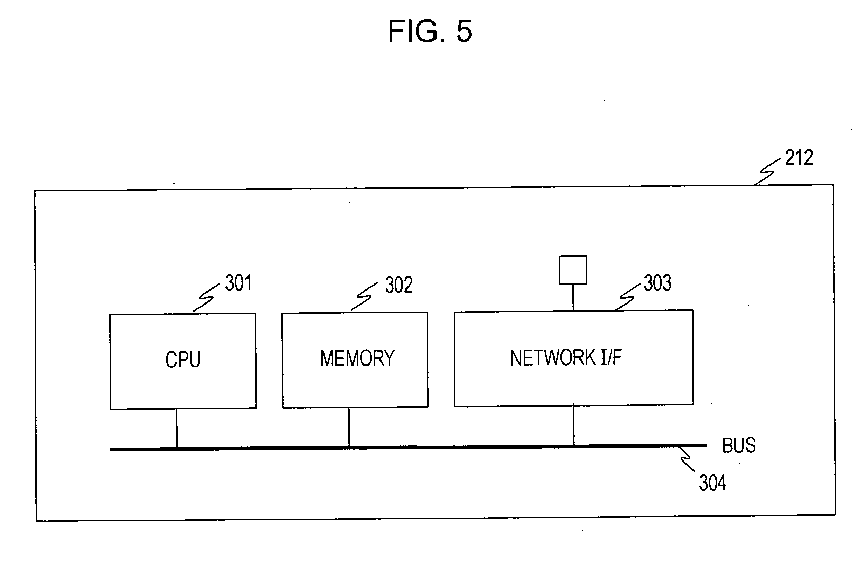

Fig. 5 shows an example of the hardware configuration of the home IMS gateway 212 described with reference to Fig. 3. As described above, the home IMS gateway 212 retains the following functions.
(a) Connecting Function with Services of IMS
(b) Gateway Function
These functions are realized by a network communication function, a basic information processing apparatus configuration, and software. The hardware shown in Fig. 5 shows an example of the hardware configuration for realizing these functions (a) and (b).

As shown in Fig. 5, the home IMS gateway 212 includes a CPU 301 as a data processing section hat executes various kinds of software (computer program), a memory 302 that is configured by a ROM as a program storage area, a RAM used for a work area or the like at the time of executing data processing, or the like, a network I/F 303 as a network connecting section, and a bus 304 for command/data transport between these components.

The network I/F 303 is, for example, a wired LAN network I/F such as IEEE802.3u. The OS and other software programs are stored in the Flash-ROM constituting the memory 302, and these programs are copied to the RAM constituting the memory 302 and executed. Further, user IDs and various kinds of setting information necessary for establishing IMS sessions are also stored in the Flash-ROM constituting the memory 302.

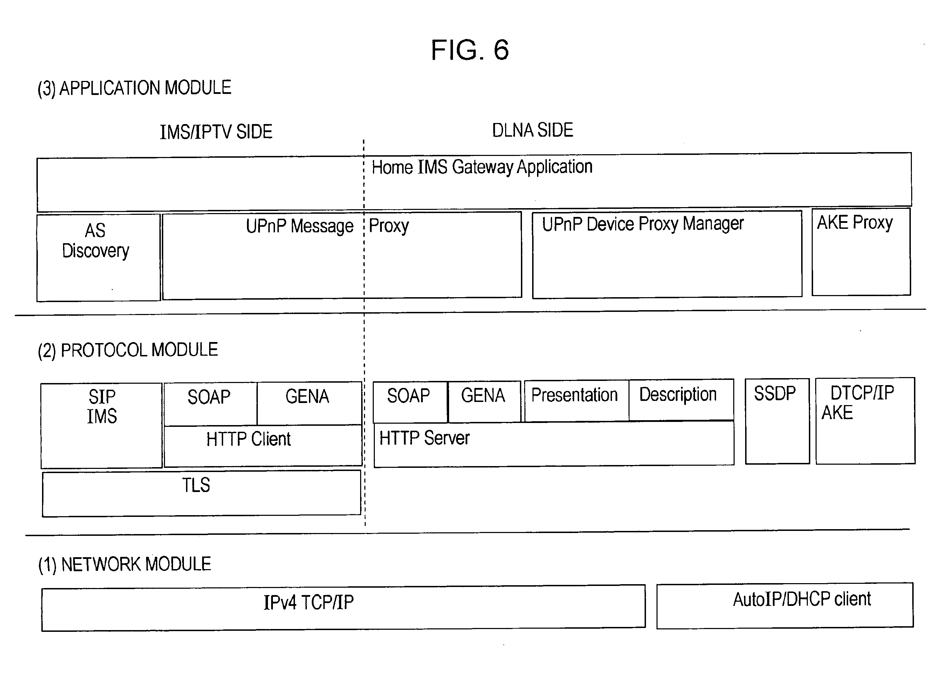

Next, referring to Fig. 6, an example of the software module configuration of the home IMS gateway 212 will be described. As shown in the drawing, the software module is classified into the following three types.
(1) Network Module
(2) Protocol Module
(3) Application Module

(1) The network module is a module that is in charge of communication control in the IP network.
(2) The protocol module is a module that is in charge of protocol control for controlling respective functions of IMS and DLNA, that is, on the IMS side, a control for executing communication according to a protocol specified on the IMS side, and on the DLNA side, a control for executing communication according to a protocol specified on the DLNA side. Since communications according to different protocols are executed on the IMS side and the DLNA side, the protocol module is configured to adapt to different protocols.
(3) The application module is a module for realizing the actual gateway function by using the protocol module, that is, a relay between the DLNA side on the home network side and the IMS network as a network that is located outside the home network.

In the drawing, in order to clarify the division of functions used on the DLNA side on the home network side and the IMS network as a network outside the home network, the area is divided by a broken line such that the software module applied on the IMS/IPTV side is shown on the left side of the broken line, and that the software module applied on the DLNA side is shown on the right side. It should be noted, however, that the network module is used in common to both the networks. Hereinbelow, details of the respective modules will be described.

First, the network module implements an Auto IP/DHCP (Dynamic Host Configuration Protocol) Client module for performing IP address setting specified by the IPv4 TCP/IP stack and UPnP DA. The same network module can be used for both the IMS and DLNA.

Basically, it suffices that the home IMS gateway 212 be connected to the home IP network, so it is not absolutely necessary to set a network I/F separately. It should be noted, however, that in cases such as when the home IMS gateway 212 is integrated with a residential gateway, a home network connecting I/F and an external network connecting I/F may be separately configured.

Since the protocols used on the DLNA side on the home network side and the IMS network as a network outside the home network are different from each other at present, the protocol module is individually set in correspondence to the respective protocols.
The DLNA side includes SOAP specified by UPnP DA, GENA (Generic Event Notification Architecture), Presentation Page by HTTP (Hyper Text Transfer Protocol) server, and Device Description module, SSDP that is in charge of Device Discovery as device discovery processing, and an AKE module that executes authentication and key exchange (AKE: Authentication and Key Exchange) by DTCP-IP (Digital Transmission Content Protection - Internet Protocol) necessary for implementing content within the home network.

The IMS side includes SIP/Module for establishing sessions with the AS (Application Server) as an IMS service providing server, and SOAP, GENA module that performs message communication with the AS. Since communication over the open Internet is assumed on the IMS side, communication execution protocols such as SIP and SOAP are implemented on the TLS (Transport Layer Security) protocol as specified by IETF RFC 2246 for security, thereby achieving a protocol setting for executing communication under a secure environment.

A characteristic feature of the home IMS gateway 212 as the information processing apparatus according to the present invention is that it is configured to execute the processing of mapping the AS (IPTV service) of the IMS as a UPnP device (UPnP Device) by using a function called Device Discovery Control as a device discovery processing function used in a DLNA-side device. That is, the home IMS gateway 212 performs mapping of a server outside the home network as a virtual home network device. Specifically, the home IMS gateway 212 creates a UPnP Media Server instance corresponding to AS (IPTV) as an external server by using UPnP Device Proxy Manager (see Fig. 6) set as an application module in the home IMS gateway 212, or the like.

In this way, the home IMS gateway 212 maps the AS (IPTV service) of the IMS, which is as an external device that does not exist in the home network, as the DMS of DLNA. In this processing, the AS (IPTV service) of the IMS is set as if it were a content providing server (DMS) existing within the home network.

When, through this mapping process, a DLNA device within the home network, for example, DMP as a content playback executing device such as TV executes device discovery processing according to UPnP, it becomes possible for the home IMS gateway 212 to notify the DMP of the fact that it has a service providing function based on the UPnP Media Server instance corresponding to AS (IPTV). On the basis of this notification, the DMP can recognize the AS (IPTV service) of the IMS as the same device as a content providing server (DMS) within the home network, thereby making it possible to receive services of the AS (IPTV service) of the IMS as an external network through the same process as that for reception of services based on content provision from within the home network.

The home IMS gateway 212 as the information processing apparatus according to the present invention can be arbitrarily set as to whether or not to perform relaying of content provided by the AS (IPTV service) of the IMS with respect to the DMP as a content playback executing device within the home network. A setting is possible in which the DMP directly acquires content data from an external network through communication between a DLNA device (DMP as a content playback executing device) and the back-end Video Server of the AS (IMS) of the IMS, without performing relaying of content. Specific examples of these processing will be described later.

In a case where the home IMS gateway 212 performs relaying of content provided by the AS (IPTV service) of the IMS, functions called Media Management, for example, a Content Directory service for performing acquisition of the metadata of a content list, and a protocol for performing transport of video content called Media Transport of the DLNA are implemented in the home IMS gateway 212. However, in the case of a configuration in which the home IMS gateway 212 does not perform relaying of content provided by the AS (IPTV service) of the IMS, these functions, that is, the Media Management functions need not be implemented in the home IMS gateway 212.

With regard to a content list request from a client device within the home network, that is, DMP as a content playback executing device as well, a setting is possible in which the content list request is directly made to an external server such as AS (IPTV service) from the client device (DMP), without relaying by the home IMS gateway 212. In this configuration, it suffices that the home IMS gateway 212 be configured such that it can respond to a device discovery request from the client. To realize transmission of a request from a client directly to an external server without relaying by the home IMS gateway 212, the URL specified by [controlURL] and [eventSubURL] of device information [Device Description] specified in the UPnP Device Architecture is set to the URL of not the home IMS gateway but the external server. In the home IMS gateway 212, by providing the device information [Device Description] set as described above to the client device, the party to which the client makes a content list request or various kinds of request by referring to the device information is set to an external server such as AS (IPTV service) thereafter. In this case, the home IMS gateway becomes a model in charge of device discovery only, thereby further lightening the load. The URL [SCPDUAL] for device information acquisition specified by the UPnP Device Architecture can be also set to the URL of not the home IMS gateway 212 but the external server.

By using the protocol module, the application module executes a gateway function, that is, a function of setting the communication environment between a DLNA device within the home network and a server that is located outside the home network. The application module can be roughly divided into a group of modules that perform a mapping process of setting the AS (IPTV) service of the IMS as the DMS of the DLNA, and a group of modules that interface, with respect to the mapped DMS of the DLNA (which is in substance the AS (IPTV) Service of the IMS), a request transmitted from the DMP as a content playback device within the home network to the AS (IPTV) service of the IMS.

The former group of modules that perform the mapping process are AS Discovery, Service Manager, and UPnP Device Proxy Manager. The latter group of modules that execute the request transfer processing are UPnP Message Proxy and AKE Proxy.

As described above, the home IMS gateway 212 as the information processing apparatus according to the present invention performs the process of mapping the AS (IPTV service) of IMS as an external device that is not present in the home network as the DMS of DLNA. The home IMS gateway 212 further has a function of selectively mapping only the service entity [AS (IPTV)] selected by the user at the time of this mapping process.

That is, in a configuration where a plurality of ASs (IPTV) of IMS/IPTV exist in an external network, and each of the ASs performs content provision, only the AS (IPTV) the user purchased and selected by using the IMS charging system is selected and mapped to the DMS of DLNA.

Of the application modules that perform a mapping process, AS Discovery as a module on the IMS/IPTV side shown in Fig. 6 executes the processing of discovering an IPTV service provided by the IMS system, and UPnP Device Proxy Manager as a module on the DLNA side manages the list of ASs discovered and acquired by the AS Discovery and presents this list to the user to execute purchasing or selection processing of AS (IPTV).

Specifically, with the home IMS gateway 212 as the information processing apparatus according to the present invention serving as the HTTP server, by using the scheme of Presentation specified by UPnP DA, the home IMS gateway 212 connects to UPnP Control Point incorporating an HTML browser, and the user selects a desired IPTV service from the HTML screen displayed by using the browser function and performs a service subscription procedure. Specifically, for example, by using a PC or TV having a browser function set as a DLNA device within the home network, a list retained by the home IMS gateway 212 is presented on the display to allow selection of an IPTV service.

By using the UPnP Message Proxy as an executing module for the request transfer processing described above, this IPTV service reception procedure can be coordinated with a charging system provided by the IMS system, and charging to the user is made from the customer information of an IMS user ID that has been set as an ID corresponding to the home IMS gateway 212.

In this way, the home IMS gateway 212 can perform selective mapping such that with the user's subscription procedure to AS (IPTV) as a condition, through the processing of UPnP Device Proxy Manager as an application module, an IPTV service to which a subscription procedure has been made is selected and mapped to DLNA DMS. It should be noted, however, in cases where there is an AS (IPTV) for which no subscription procedure is required, such as an AS (IPTV) that provides free-of-charge content, the user's subscription procedure is not necessary, nor is user's selection an absolutely necessary condition for mapping.

The DMP as a content playback device that is a DLNA device within the home network interprets the AS (IPTV) that has completed the mapping process in the home IMS gateway 212 as a content providing server (DMS) within the home network, thus allowing reception of services of the AS (IPTV).

UPnP Message Proxy as the application module relays a message supplied from DLNA DMP to AS (IPTV). SOAP, GENA equivalent to UPnP are used as the protocols for achieving this, and AS achieves mutual compatibility by directly processing the message of UPnP Media Server, Content Directory service as specified by UPnP AV or by performing protocol conversion of AS (IPTV) in UPnP Message Proxy.

The example of the software module configuration of the IMS gateway 212 shown in Fig. 6 is a software module configuration in the case where the home IMS gateway can execute both communication according to the communication protocol on the IMS/IPTV side and communication according to the communication protocol on the DLNA side within the home network, and the home IMS gateway 212 executes protocol conversion as required during communication between the IMS/IPTV side and the DLNA side.

Other than the configuration in which protocol conversion processing is performed by the home IMS gateway 212, a configuration is also possible in which the protocol conversion process is performed by an external server that directly executes communication with the home IMS gateway 212 side, for example, the AS on the IMS side or the execution server of the IPTV service. In the configuration in which necessary protocol conversion is executed by an external server as described above, the home IMS gateway 212 may simply have the protocol module and the application module on the DLNA side. In the case where such a configuration is adopted, the mapping process of the external server can be executed by executing a device discovery process according to the SSDP protocol specified by DLNA.

With regard to the content list and metadata acquisition processing executed by a client device within the home network, that is, DMP as a content playback device, the embodiment described below adopts a method in which the AS directly processes the UPnP Content Directory service. In the embodiment, a service subscription procedure is performed with UPnP Control Point in which the HTML browser is implemented, and while this may be DMP of DLNA, this may not necessarily be DMP of DLNA. The same processing can be performed with the HTML browser of a third party, for example, a PC. The purchasing procedure can be similarly performed when the HTML browser is implemented in a mobile phone or the like.

Further, by adopting a setting in which the home IMS gateway 212 itself has a user interface such as a display or an input section, a list acquired from AS (IPTV) can be directly presented onto the user interface to enable input of user-input information. Service subscription procedures can be thus performed even without control by the HTML browser.

The subscription procedure for AS (IPTV) can take various forms. That is, in addition to selection on a service-by-service basis as the selection of AS (IPTV) itself, various settings are possible, including content-by-content selection of content provided by AS (IPTV). According to these settings, the scheme for selecting purchases on a content-by-content basis is provided from Presentation Page on the basis of the setting of AS (IPTV), the selection information is registered to the IMS side as data constituting user profile information, and content provision according to the registered information is performed on the AS (IPTV) side.

As described above, the home IMS gateway 212 can be set either to perform or not to perform relaying of content provided by the AS (IPTV service) of the IMS with respect to the DMP as a content playback executing device within the home network. In the latter case, service logic processing on the application level, for example, data processing corresponding to respective services such as interpretation of services provided by the AS (IPTV) service or conversion thereof into a format intelligible to the DMP, is not necessary, nor is it unnecessary to perform temporary storage or conversion of content data. It is thus possible to realize the home IMS gateway as an apparatus with very inexpensive software or hardware configuration.

Eliminating the need to perform service logic processing by the gateway device makes it possible to achieve enhanced service extendability as compared with a configuration in which such processing is performed. For example, there are cases where the AS (IPTV) as a content providing entity performs addition of content metadata or the like. In this case, in a configuration in which the gateway device performs service logic processing, updating of a program, for example, is necessary in order to allow the gateway to execute interpretation and processing of the added metadata. However, the home IMS gateway according to the present invention can be set so as not to perform these processing, and various service logic changes are possible solely by changes on the distribution service side without making changes to the gateway itself.

As described above, as for the processing mode of the home IMS gateway 212, the following two configurations can be adopted:
(1) A configuration in which relaying of content provided by the AS (IPTV service) of the IMS to a content playback executing device (DMP) within the home network is performed; and
(2) A configuration in which relaying of content provided by the AS (IPTV service) of the IMS to a content playback executing device (DMP) within the home network is not performed, and content playback is performed through communication between the DMP and the AS (IPTV service).

In the configuration (2) mentioned above in which content playback is performed through communication between the DMP and the AS (IPTV service), content is directly transmitted from the content distribution service on the Internet to the DMP as a playback device. Therefore, unlike a system in which content is temporarily downloaded to a home server before being re-distributed to the household, content can be played back on an on-demand basis, which proves highly convenient for the user as well. Further, in the above-mentioned system with no interfacing of content transmissions, no overlapping content data transmissions occur within the home network, thus preventing wasted bandwidth usage. Further, limitations on the topology of the home network are eliminated, which advantageously diversifies the range of products in which the gateway function is implemented.

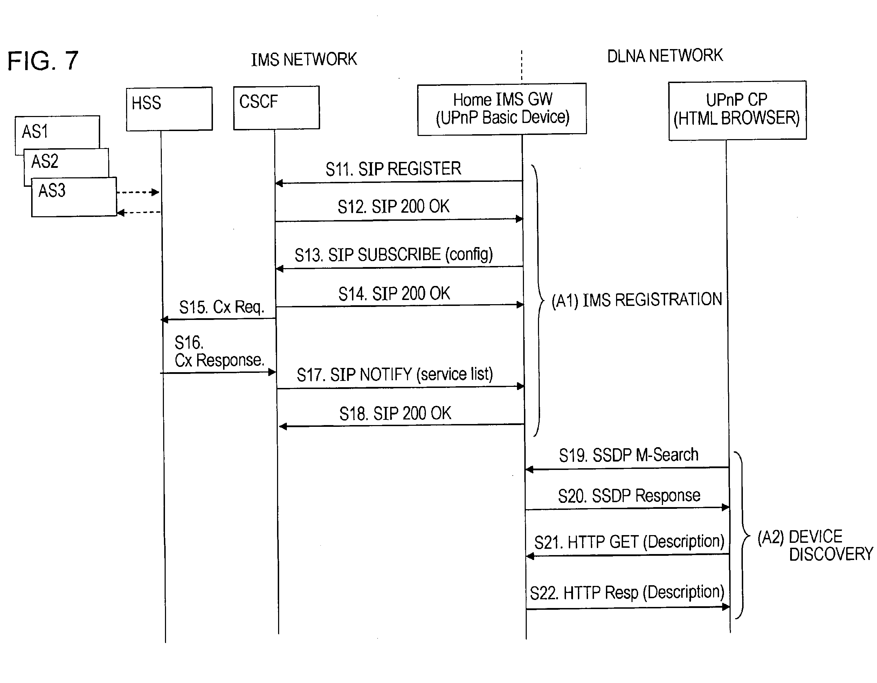

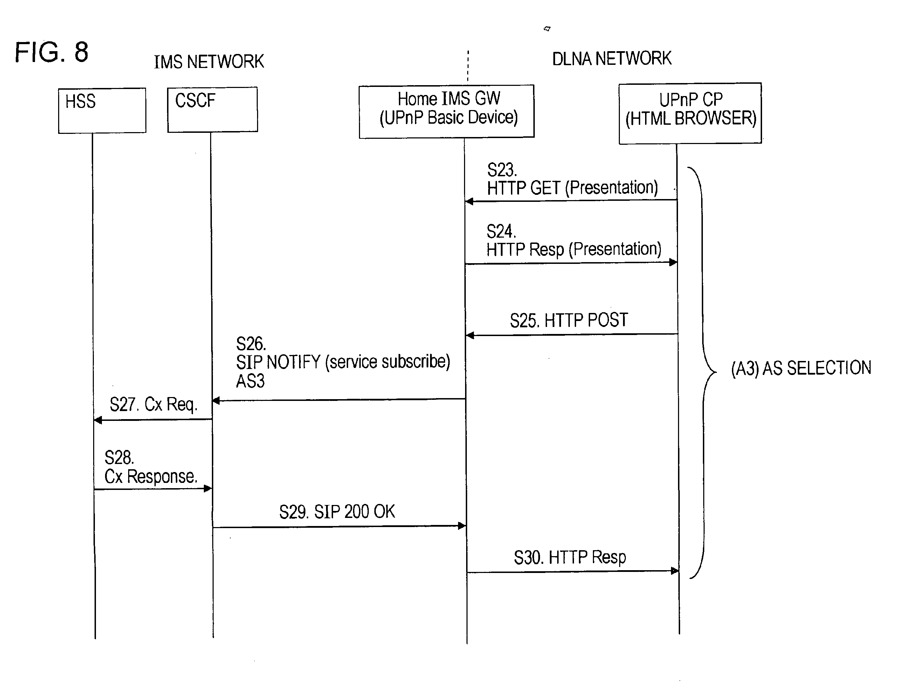

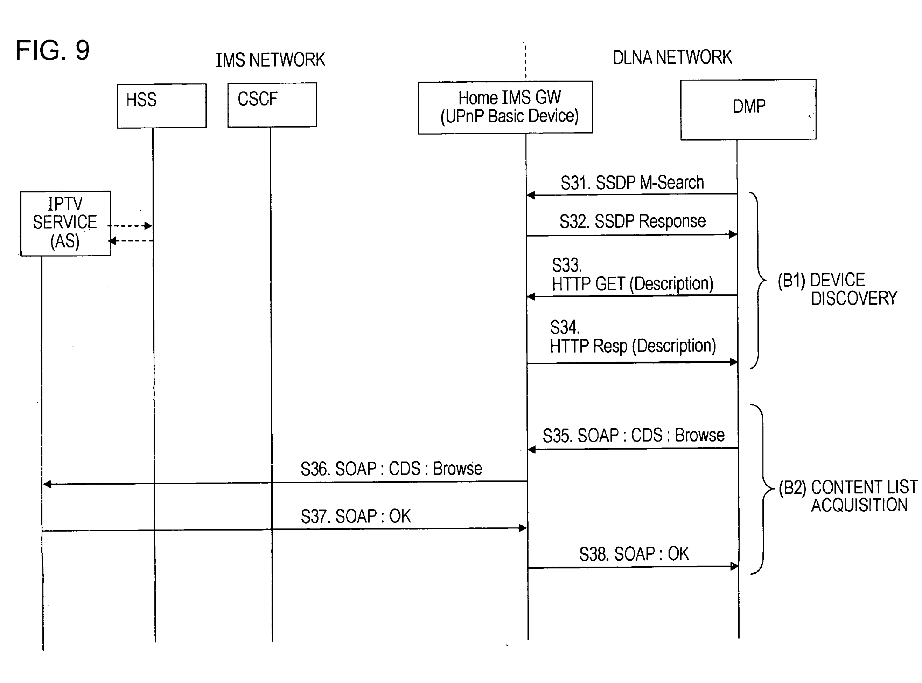

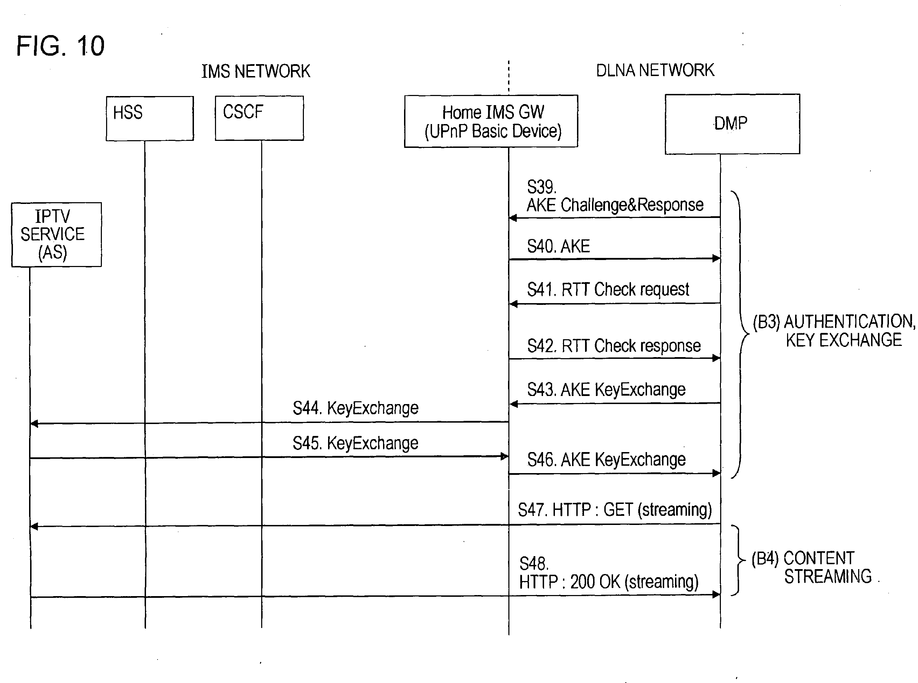

Hereinbelow, with reference to sequence diagrams of Figs. 7 to 10, description will be given of the processing sequence in the case of the processing (2) mentioned above, that is, in the case where content playback is performed through communication between the DMP and the AS (IPTV service). The sequence diagrams of Figs. 7 to 10 illustrate the sequence of the following processes.
(A) Sequence of AS (IPTV) Subscription Procedure (Figs. 7, 8)
(A1) IMS Registration Process
(A2) Device Discovery Process
(A3) AS (IPTV) Selection Process
(B) Sequence of Usage of Content provided by AS (IPTV) (Figs. 9, 10)
(B1) Device Discovery Process
(B2) Content List Acquisition Process
(B3) Authentication and Key Exchange Process
(B4) Content Streaming Process

First, referring to Figs. 7, 8, the sequence of AS (IPTV) subscription procedure will be described. Figs. 7, 8 show the following components in order from the left side:
(1) Three IPTV services AS1, AS2, and AS3 as application servers that execute content provision services corresponding to IPTV in the IMS network;
(2) An HSS having a database for management of user IDs used in the IMS, management of the profile of services to which each user subscribes, management of authentication information, management as to whether or not each IMS service can be used, and user movement management;
(3) A CSCF that performs user registration and session set-up control on the basis of SIP (Session Initiation Protocol) in the IMS network;
(4) A home IMS gateway; and
(5) An HTML browser (user interface) as a UPnP control point.
Further, [Cx][SIP][SSDP][HTTP] shown in each step indicates protocols applied to respective communications.

The AS (IPTV) subscription procedure sequence shown in Figs. 7, 8 can be divided into the following three phases.
(A1) IMS Registration Process
(A2) Device Discovery Process
(A3) AS (IPTV) Selection Process
Hereinbelow, each of the processes will be described.

### (A1) IMS Registration Process

In the IMS registration process as the first phase, first, in step S11, the home IMS gateway transmits the IMS user ID set in the home IMS gateway in advance to the CSCF of the IMS network, and receives a registration confirmation in step S12 to perform registration with respect to the IMS network. Next, in step S13, the home IMS gateway presents configuration information (config) to the CSCF, and receives a confirmation response in step S14.

In step S15, the CSCF requests the HSS, which has a database that manages user profile information, for information of usable services registered in association with IMS user IDs and acquires the information (step S16). In step S17, the CSCF transmits to the home IMS gateway the list of usable services thus acquired. In step S18, the home IMS gateway transmits a reception confirmation to the CSCF.

The home IMS gateway acquires the list of usable services in this way and stores it into a memory. The home IMS gateway creates an HTML document from the IPTV service list thus acquired, in preparation for AS setting by the HTML browser thereafter.

### (A2) Device Discovery Process

The second phase is a device discovery process. Initially, the AS to be used has not been selected by the user. Therefore, at this point, the home IMS gateway has not mapped AS (IPTV) as DLNA DMS, so DMP as a content playback device within the home network cannot perform content reception by interpreting AS (IPTV) as DMS.

As described above, when executing the selection of AS (IPTV), the home IMS gateway serves as the HTTP server, and by using the scheme of Presentation specified by UPnP DA, connects to the UPnP Control Point incorporating an HTML browser so that the user selects a desired IPTV service from the HTML screen displayed by using the browser function.
The (A2) device discovery process shown in Fig. 7 represents the sequence of this process.

To execute the selection of AS (IPTV), the user transmits processing according to the device discovery protocol specified by UPnP, that is, SSDP M-Search of step S19, from the UPnP Control Point on a PC or the like having a browser function, for example, and in step S20, receives SSDP M-Response as a response thereto, thus discovering that the home IMS gateway is connected on the home network.
Steps S21, S22 represent specific device-information requesting and receiving steps.

### (A3) AS (IPTV) Selection Process

Fig. 8 shows the sequence of the AS (IPTV) selection process to be executed next. In this phase, the user browses the AS (IPTV) service list acquired by the home IMS gateway in the first phase from the UPnP Control Point on a PC or the like, and executes service (AS) selection.

First, in steps S23, 24, with respect to the home IMS gateway as the HTTP server, an HTML document is acquired on the basis of HTTP GET, and an HTML page is displayed. The AS (IPTV) service list is displayed on that screen.

When the user selects from that list the AS (IPTV) from which the user wishes to receive services or content, in step S25, this request information is inputted to the home IMS gateway. In step S26, the home IMS gateway requests service subscription with respect to the CSCF of the IMS. In step S27, on the basis of the service subscription request from the home IMS gateway, the CSCF executes registration of information corresponding to this service subscription request to the HSS as registration information corresponding to the user. Upon completion of the service subscription registration process, in step S28, a processing completion response is notified by the HSS to the CSCF, and in step S29, is notified by the CSCF to the home IMS gateway. Further, in step S30, the processing completion response is transmitted to an apparatus having a user interface such as a PC as the UPnP Control Point, and is confirmed by the user.

There are cases where, for example, charging processing is performed during this (A3) AS (IPTV) selection process, in which case inputting and communication of information necessary for the charging processing are executed.

As described above, the (A) sequence of AS (IPTV) service subscription procedure includes the following three processes.
(A1) IMS Registration Process
(A2) Device Discovery Process
(A3) AS (IPTV) Selection Process
The AS (IPTV) subscription procedure is completed upon completion of these processes.

Upon completion of this AS (IPTV) subscription procedure, the home IMS gateway executes mapping of the selected AS (IPTV) as DLNA DMS, thereby allowing the DMP as a content playback device within the home network to perform content reception by interpreting the selected AS (IPTV) as the DMS. That is, the home IMS gateway creates, by using the UPnP Device Proxy Manager shown in Fig. 6 or the like, an instance of UPnP Media Server corresponding to the selected AS (AS3 in this example).

Through this mapping process, AS (IPTV) as an application server of the IMS outside the home network is handled in the same way as the DMS (DLNA Media Server) as a content providing server within the home network, and can be used from the DMP (DLNA Media Player) as a content playback device within the home network.

Hereinbelow, referring to Figs. 9, 10, description will be given of the usage sequence for content provided by AS (IPTV) by DMP as a content playback device within the home network. Figs. 9, 10 show the following components in order from the left side:
(1) An IPTV service (AS) (Content providing entity);
(2) An HSS having a database for management of user IDs used in the IMS, management of the profile of services to which each user subscribes, management of authentication information, management as to whether or not each IMS service can be used, and user movement management;
(3) A CSCF that performs user registration and session set-up control on the basis of SIP (Session Initiation Protocol) in the IMS network;
(4) A home IMS gateway; and
(5) A DMP (DLNA Media Player) as a content playback device within the home network.
It should be noted that the (1) IPTV service (AS) can be either IPTV service only or a combination of IPTV service and AS. [SSDP][HTTP][SOAP][AKE] shown in each step indicates protocols applied to respective communications.

The usage sequence for content provided by AS (IPTV) shown in Figs. 9, 10 can be divided into the following four phases.
(B1) Device Discovery Process
(B2) Content List Acquisition Process
(B3) Authentication and Key Exchange Process
(B4) Content Streaming Process
Hereinbelow, each of the processes will be described.

### (B1) Device Discovery Process

The first process is a device discovery phase. At this time, through the AS subscription sequence described above with reference to Figs. 7, 8, the home IMS gateway has already mapped AS (IPTV) as DLNA DMS, and it has been advertised to each DLNA device within the home network that AS (IPTV) can be used as DLNA DMS. That is, by the device discovery sequence specified by UPnP DA, all DMPs as content playback apparatuses connected to the home network can acquire AS (IPTV) information as DMS from the home IMS gateway. This device discovery sequence corresponds to the processing of steps S31 to S34.

DMP as a content playback device transmits processing according to the device discovery protocol specified by UPnP, that is, SSDP M-Search of step S31, to the home IMS gateway, and in step S32, receives SSDP M-Response as a response thereto, thus discovering the AS (IPTV) set as DMS. Steps S33, S34 represent specific device-information requesting and receiving steps.

It should be noted that in this device discovery process, the home IMS gateway provides, to DMP as a content playback device, information based on the UPnP Media Server instance corresponding to AS (IPTV) created by the home IMS gateway by the mapping process, that is, server information corresponding to AS (IPTV). Upon receiving this information, the DMP interprets the AS (IPTV) as a content providing server (DMS) within the home network.

### (B2) Content List Acquisition Process

The second process is a process of acquiring a content list from the AS (IPTV) set as DMS. As in the example described above with reference to the AS subscription sequence, it is assumed that the home IMS gateway has established a session with the IMS network. If a section has not been established or a section has been cut off, reconnection is performed with a content acquisition request or the like as a trigger. Information of the AS that has been subscribed to by establishing a session with the IMS network has been already acquired.

In step S35, the DMP issues a Browse action for Content Directory Service of UPnP with respect to the AS (IPTV) that has been discovered in the first phase and set as DMS. Upon receiving the Browse action from the DMP, in step S36, the home IMS gateway relays this request for transport to IPTV (AS).

The IPTV (AS) interprets the contents of this Browse action, creates a video content list from a back-end electronic program information storage server (EPG server) or the like, and sends a response to the DMP via the home IMS gateway (steps S37, S38). For example, when the content list has a layered structure, a plurality of Browse actions are issued. It should be noted that as specified in the UPnP Content Directory Service, the content list is expressed in the form of an XML document in conformity to XML Schema called DIDL-Lite. The resource information (URI) of video data of each content indicates video content provided by back-end Video Server of the AS.

As described above, a setting is possible in which the content list request from DMP is made directly to an external server such as AS (IPTV service) from a client device (DMP), without relaying by the home IMS gateway. To achieve this, the URL designated by [controlURL] and [eventSubURL] of device information [Device Description] specified in the UPnP Device Architecture is set to the URL of not the home IMS gateway but the external server. In the home IMS gateway, by providing the device information [Device Description] having the above-described URL setting to the client device, the party to which a client makes a content list request or various kinds of request by referring to the device information is set to an external server such as AS (IPTV service) thereafter.

### (B3) Authentication and Key Exchange Process

The third phase is authentication and key exchange. In DLNA, when transmitting copy-protected content, the content is encrypted in accordance with DTCP-IP before being transmitted. Also in the case of streaming from the video server of AS (IPTV), encryption in conformity to DTCP-IP is performed and encrypted content is transmitted.

The key to be applied to the encryption of content is generated through an authentication and key exchange (AKE) process according to the specification of DTCP-IP. As shown in Fig. 6, the home IMS gateway has a DTCP-IP AKE Proxy function. When receiving content, DMP as a content playback device performs authentication and key exchange with the home IMS gateway having the DMS that the DMP recognizes as a content providing service entity.

While the resource URI of content set in the list acquired by the content list acquisition process of (B2) is set to include the IP address of the video server of AS, the address for which an authentication and key exchange process, that is, an AKE process required for executing such content acquisition is executed, is set to the home IMS gateway. That is, the DMP performs authentication and key exchange with the home IMS gateway in which an instance of the DMS recognized as a content providing service entity is registered.

Although the target of authentication and key exchange by the DMP is often set to the encrypted-content transmitting entity, that is, the IP address of the video server of AS included in content resource URI, in the configuration of the present invention, the target of the AKE process executed by the DMP in response to an acquisition request for content included in the content list provided to the DMP in the content list acquisition process of (B2) is set to the home IMS gateway.

This can be achieved by, for example, inclusion of metadata with the target of AKE set as the home IMS gateway in the metadata corresponding to content. As for the setting of the content list that the home IMS gateway receives from the IPTV service (AS), the list may be set in this way in advance, or addition or change of metadata may be performed in the home IMS gateway. Alternatively, at the time of provision of the content list to DMP, the home IMS gateway may execute a notification informing that the target of AKE is the home IMS gateway.

The authentication and key exchange process is executed in accordance with the authentication and key exchange (AKE: Authentication and Key Exchange) process sequence specified by DTCP-IP.

In the configuration according to the present invention, the authentication and key exchange between DMP and the home IMS gateway is completed through steps S39 to S46 shown in Fig. 10 listed below.
- S39:: AKE Challenge and Response
- S40:: AKE
- S41:: RTT (Round Trip Time) Check request
- S42:: RTT Check response
- S43:: AKE Key Exchange
- S44:: Key Exchange
- S45:: Key Exchange
- S46:: AKE Key Exchange

In this authentication and key exchange process, in order to confirm that the home IMS gateway as the target of AKE is present near DMP, checking of TTL (Time to Live) of IP packets and checking of response time are carried out as the RTT measurement in steps S41, S42.
Steps S44, S45 represent characteristic processing according to the configuration of the present invention. According to this processing, in order to share a key to be applied as an encryption key between the IPTV service (AS) as a content providing entity and the DMP as a content using entity, the key shared by the home IMS gateway and the DMP in the AKE sequence is passed to the IPTV service (AS). Adding this processing of steps S44, S45 enables sharing of an encryption key between the IPTV service (AS) as a content providing entity and the DMP as a content using entity. In this regard, this IPTV service (AS) is a legitimate service permitted to share a key, and the processing of steps S44, S45 is performed via secure communication.

### (B4) Content Streaming Process

Lastly, the fourth phase is a content streaming process. In step S47, DMP as a content playback device issues a content request based on HTTP GET through the application of the URL of the resource acquired in the (B2) content list acquisition process mentioned above, and requests HTTP streaming.

The video server of the IPTV service (AS) encrypts content data with the key shared with DMP in the previous AKE phase, and in step S48, starts streaming transmission of content with respect to DMP as a DLNA device within the home network.

DMP as a content playback device within the home network performs decryption and decoding of the data received from the IPTV service (AS) through application of the encryption key shared with the IPTV service (AS) in the previous AKE phase, thereby executing content playback.

The processing configuration according to the present invention is one that conforms to streaming playback according to DTCP-IP specified by DLNA, except for that, in the following third and fourth phases mentioned above:
(B3) Authentication and Key Exchange Process; and
(B4) Content Streaming Process,
the IP address the AKE module applies is set to the home IMS gateway that is different in substance from the server as a content providing entity.

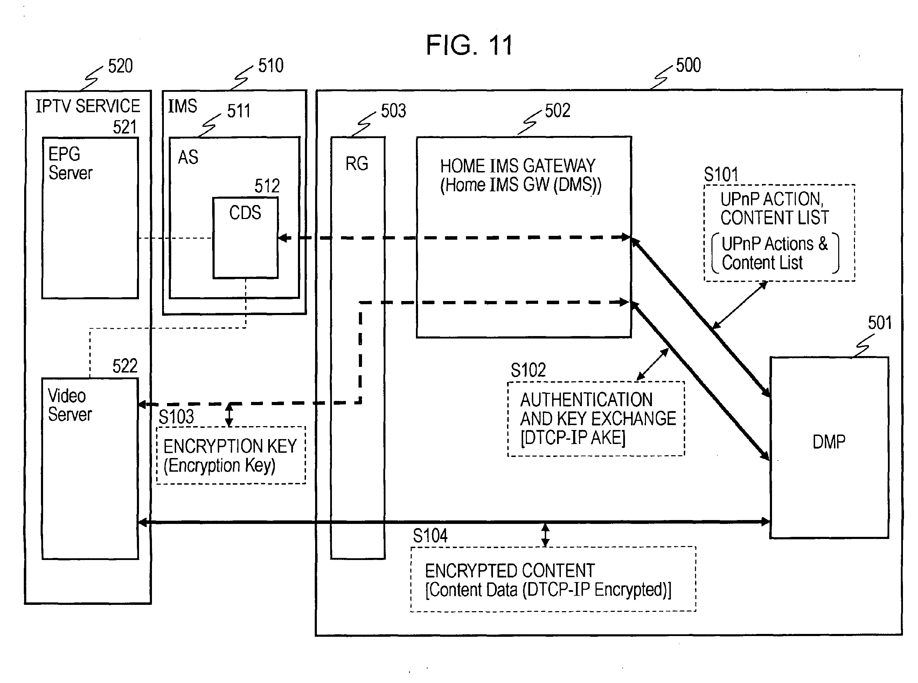

The general overview of data communication in the content usage process described with reference to Figs. 9, 10 will be described with reference to Fig. 11. Fig. 11 shows a DMP 501 as a content playback device, a home IMS gateway 502, and a residential gateway (RG) 503 as devices that are present within a home network 500. Further, an IP multimedia Subsystem (IMS) 510 and an IPTV service 520 are shown as components that are present outside the home network 500.

As described above with reference to Fig. 3, the IP multimedia subsystem (IMS) 510 forms the basis of wireless communication infrastructure for mobile phones developed by 3GPP (3rd Generation Partnership Project) that is a standardization project for third generation mobile communication systems. With a functional element called CSCF (Call Session Control Function) at its core, the IMS is configured by such functional elements as a home subscriber subsystem (HSS: Home Subscriber Subsystem) and an application server (AS: Application Server). Fig. 11 shows an application server (AS) 511. The application server (AS) 511 includes a CDS (Content Directory Service) 512 as a directory service executing section that performs such processing as function registration for a service providing server.

An IPTV service 520 has an EPG server 521 as a server that provides EPG (Electronic Program Guide) as a program information guide such as a content list, and a video server 522 as a server that provides video content. A content list provision service and a content provision service with respect to the DMP 501 as a user terminal are realized through cooperation between each of the servers and the CDS 512 of the AS (IPTV) 511.

Description will be given of the basic processing flow in the case where the DMP 501 as a content playback device within the home network 500 acquires content from the IPTV service 520 that is located outside the home network. The home IMS gateway 502 has already performed mapping of the IPTV service (AS) as DLNA DMS through the AS subscription sequence described above with reference to Figs. 7, 8.

First, in step S101, the DMP 501 executes device discovery as a UPnP action, and acquires information of the AS (IPTV) set as DMS from the home IMS gateway 502. In the device discovery process, the home IMS gateway 502 provides information based on the UPnP Media Server instance corresponding to the AS (IPTV) created by the home IMS gateway 502 in the mapping process, to the DMP 501 as a content playback device. Upon receiving this information, the DMP 501 interprets the AS (IPTV) as a content providing server (DMS) within the home network.

Further, the DMP 501 issues a Browse action for Content Directory Service of UPnP with respect to the AS (IPTV) that has been set as DMS. Upon receiving the Browse action from the DMP 501, the home IMS gateway 502 relays this request to the AS 511 (CDS 512). The AS 511 (CDS 512) acquires a list of video content provided by the EPG server 521 of the IPTV service 520, and in the home IMS gateway 502, the content list is transmitted to the DMP 501 as a response.

It should be noted that as described above, this content list records the content URL applied to the acquisition of content as metadata, and target device information for the authentication and key exchange (AKE) process that is executed as a precondition for content acquisition. The target device information for the key exchange (AKE) process is set to the home IMS gateway 502. Alternatively, a setting may be employed in which the home IMS gateway 502 notifies the DMP 501 of the fact that the target device for the key exchange (AKE) process is the home IMS gateway 502, without using content metadata.

Prior to content reception, in step S102, the DMP 501 executes an authentication and key exchange (AKE) process according to the specification of DTCP-IP. The DMP executes the process with the home IMS gateway 502 set as the execution target for authentication and key exchange. It should be noted, however, that in this authentication and key exchange (AKE) process, in step S103, the home IMS gateway 502 provides the key applied as an encryption key for content to the video server 522 of the IPTV service 520 as a content providing entity. Through this process, at the completion of the authentication and key exchange (AKE) process, the key is shared between the video server 522 of the IPTV service 520 as a content providing entity, and the DMP as a content using entity.

Next, in step S104, the DMP 501 as a content playback device issues a content request based on HTTP GET by applying the URL of the resource acquired in the content list acquisition process, and requests the video server 522 for HTTP streaming. The video server 522 of the IPTV service 520 encrypts content data with the key shared with the DMP 501 in the previous AKE phase, and transmits the encrypted data to the DMP 501. The DMP 501 executes description processing with respect to the data received from the IPTV service 520 through application of the shared encryption key, thereby executing content playback.

As described above, according to the configuration of the present invention, it is possible for the DMP as a content playback apparatus within the home network to receive content from a content providing server that is located outside the home network and playback the content.

To enable this processing, the home IMS gateway installed within the home network executes communication with a content providing server, and performs mapping of the content providing server as a virtual home network device, that is, creates an instance that records the server information of an external server and stores it into a storage section. Upon reception of a device discovery request according to the UPnP specification from a content playback apparatus within the home network, on the basis of the instance, the home IMS gateway executes a process of providing server information corresponding to a content providing server to the content playback device as device information indicating a device from which services can be received.

Further, upon receiving a content acquisition request from a content playback apparatus, that is, an acquisition request for content provided by a content providing server, the home IMS gateway transfers this request to the content providing server, and causes the content to be transmitted to the content playback apparatus from the content providing server, thereby enabling content reception and playback by the content playback apparatus.

As for the authentication and key exchange whose execution is required as the condition for content transmission specified by DLNA, a configuration is adopted in which a key generated by executing the process (AKE) as specified between the content playback apparatus and the home IMS gateway is transmitted by the home IMS gateway to a content providing server. The content providing server and the content playback apparatus can thus share the key generated in the authentication and key exchange process. As in the content transmission processing executed by DMS within the home network, encrypted content is transmitted from the content providing server to the content playback apparatus, thus realizing secure content transmission and reception.

It should be noted that this content transmission scheme can be applied to Home-to-Home content transmission as well. By another household home server providing similar services in place of the video server 522 of the IPTV SERVICE 520 shown in Fig. 11, content transmission can be performed within that household. In such non-commercial content transmissions, there are cases where content is transmitted without being encrypted.

In the foregoing, description has been made of an embodiment with respect to the home IMS gateway for allowing DMP as a content playback device conforming to the DLNA guidelines shown in Fig. 4 to receive IPTV services. As described above with reference to Fig. 4, DMS as a content providing server specified by DLNA implements the UPnP media server (UPnP Media Server), and the main content directory service (Content Directory Service) is implemented in the UPnP media server (UPnP Media Server), thereby allowing content list and metadata acquisition through application of the content directory service. That is, by using the content directory service (Content Directory Service), the DMP as a DLNA-specified content playback device performs acquisition of the content list streamed from the DMS as a DLNA-specified content providing server. In the embodiment described with reference to Fig. 9, the content list acquisition process by the UPnP content directory service (Content Directory Service) is performed through the application of SOAP/GENA message communication specified by UPnP DA. Next, description will be given of a processing example using the scheme of Presentation specified by UPnP DA.

### [Example of Processing Using Scheme of Presentation (Presentation) Specified by UPnP DA]

In the embodiment described below, the home IMS gateway 212 shown in Fig. 3 as the information processing apparatus according to the present invention serves as the HTTP server, and by using the scheme of presentation (Presentation) specified by UPnP DA, the home IMS gateway 212 connects to a UPnP Control Point incorporating an HTML browser, and the user selects a desired IPTV service from the HTML screen displayed by using the browser function and receives the service.

That is, the embodiment represents a processing example in which, by applying the scheme of presentation (Presentation) specified by UPnP DA described above, for example, a process of providing HTML data describing a service screen including a content list, content information, and the like is executed from the home IMS gateway 212 with respect to the DMP as a content playback device, for example, the TV (DMP) 213 shown in Fig. 3, and the service screen configured by HTML data is displayed on a display on the side of the DMP as a content playback device so that the user performs content selection on the basis of the displayed data to receive IPTV services. That is, for example, by using a PC or TV having a browser function set as a DLNA device within the home network, a list retained by the home IMS gateway 212 is presented on a display to allow selection of IPTV services, thereby performing service reception.

In this embodiment, the content playback device, that is, the TV (DMP) 213 shown in Fig. 3, for example, implements an HTML browser for realizing a presentation (Presentation) function specified by UPnP DA. Although the UPnP content directory (UPnP Content Directory) service is not used in this embodiment, the implementation of the content playback device is based on the specification for media transport by DLNA or the DTCP-IP specification for content protection for the purpose of the streaming playback function.

The usage sequence for content provided by AS (IPTV) is divided into the following four phases.
(B1) Device Discovery Process
(B2a) Service Screen Acquisition
(B3) Authentication and Key Exchange Process
(B4) Content Streaming Process
Of the above-mentioned phases, the processing of each of the phases (B1), (B3), (B4) is the same as that described in the previous embodiment with reference to Figs. 9, 10. While in the processing described with reference to Figs. 9, 10 the content list acquisition process of (B2) in steps S35 to S38 described with reference to Fig. 9 is executed, according to this embodiment in which the scheme of presentation (Presentation) specified by UPnP DA is used, the (B2a) service screen acquisition process is performed instead of this (B2) content list acquisition process.

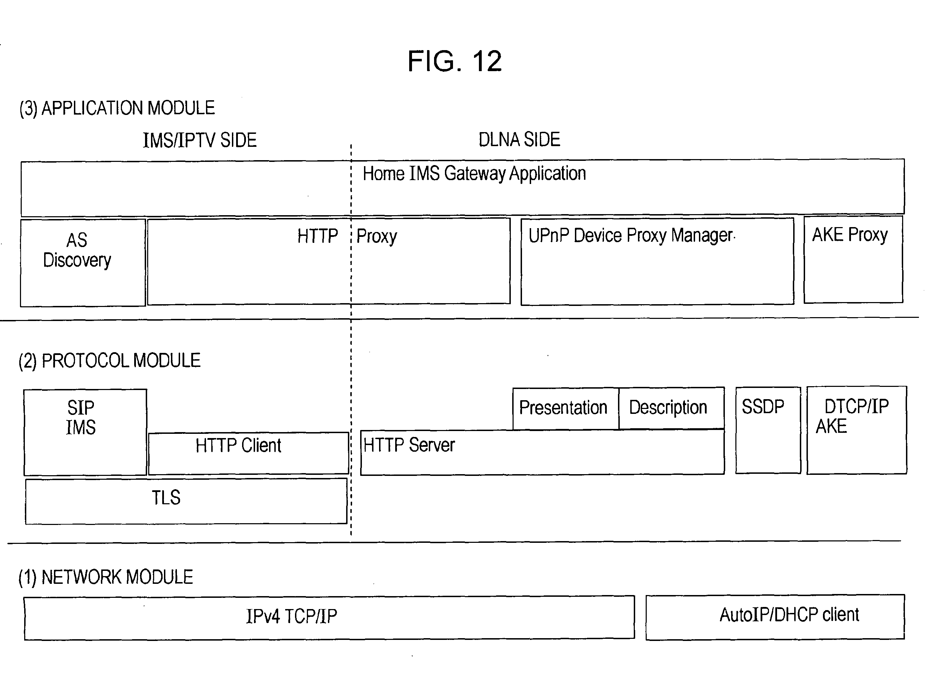

Fig. 12 shows an example of the software module configuration of the home IMS gateway 212 for performing this (B2a) service screen acquisition process. In this embodiment of the service screen operation type, since the service screen is acquired by using the HTML browser function, the software module of SOAP, GENA described with reference to Fig. 6 is not implemented. Further, instead of the UPnP message proxy (UPnP Message Proxy) described with reference to Fig. 6, an HTTP proxy (HTTP Proxy) that relays HTML data between an HTTP server and an HTTP client is implemented.

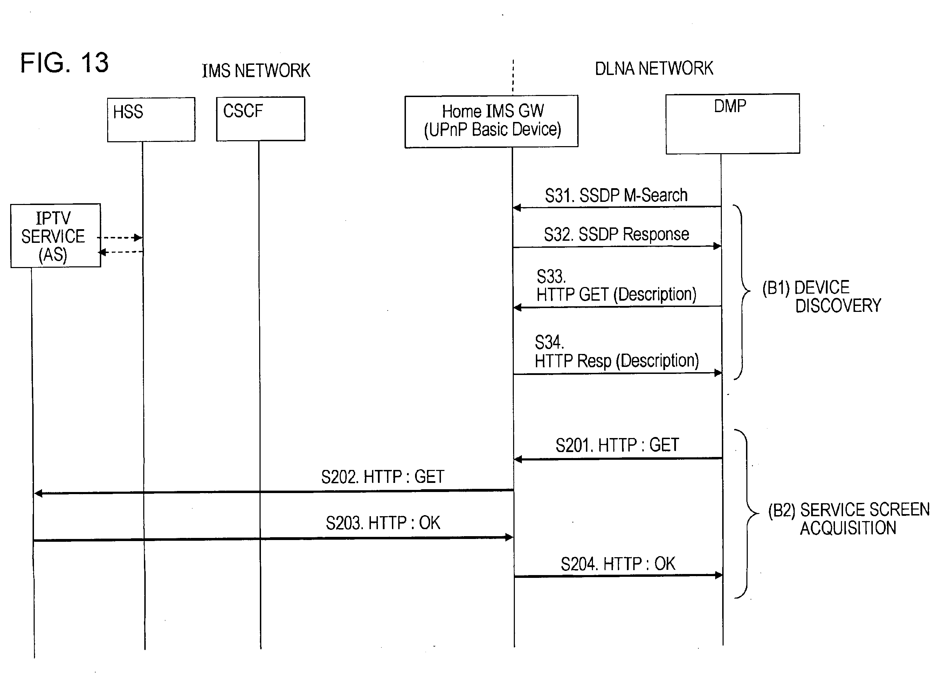

By referring to the sequence diagram of Fig. 13, the following sequences according to this embodiment will be described.
(B1) Device Discovery Process
(B2a) Service Screen Acquisition Process
The (B1) device discovery process is the same as the process described above with reference to Fig. 9. The DMP (for example, the TV (DMP) 213 shown in Fig. 3) as a content playback apparatus performs a device discovery process through processing steps S31 to S34 according to a device discovery protocol specified by UPnP. Through this process, the DMP as a content playback device discovers a content providing server (DMS) implemented in the home IMS gateway, and acquires, in accordance with the specification of UPnP DA and by means of device information (Device Description) of the DMS, the presentation URL (Presentation URL) for acquiring HTML data provided by an HTTP server implemented in the DMS.

In the (B2a) service screen acquisition process to be executed next, first, in step S201, the DMP as a content playback device transmits an HTTP:GET request to the HTTP server of the DMS by using the presentation URL (Presentation URL) acquired in the (B1) device discovery process.

In step S202, the HTTP proxy (HTTP Proxy) implemented in the home IMS gateway transmits the HTTP:GET request received by the HTTP server from the DMP as a content playback device to the application server (AS) of the IPTV service.

By using content information acquired from the EPG server, the application server (AS) of the IPTV service creates a service screen including a content list as HTML (HyperText Markup Language) data, and in step S203, returns the HTML data representing the service screen to the home IMS gateway as an HTTP:OK response.

In step S204, the home IMS gateway transfers the response including HTML data, which is received from the application server (AS) of the IPTV service, to the DMP as a content playback device by the HTTP proxy (HTTP Proxy).

The DMP as a content playback device performs rendering with an HTML browser with respect to the HTML data transmitted by the application server (AS) of the IPTV service and transferred via the home IMS gateway, thereby creating a service screen including a content list and the like for display to the user. An IPTV service content list is included in this service screen. The user selects the content to be played back from this content list.

This content selection process is executed as a process of selecting a content list displayed on a screen by means of a pointer such as a remote control, a switch, a keyboard, a mouse, or the like. Through this content selection process, the resource URL of content included in HTML data is identified. By using the URL corresponding to the selected content, the subsequent processes described above with reference to Fig. 10 are performed:
(B3) Authentication and Key Exchange Process; and
(B4) Content Streaming Process.
The DMP as a content playback device performs content playback through these processes. That is, a client device inputs information on the user's content selection with respect to the content list included in the service screen, identifies the URL corresponding to the selected content, that is, the recourse URL of content included in HTML data on the basis of this content selection information, and executes an authentication and key exchange process or content streaming process based on the URL.

While in the sequence diagram of Fig. 13 the service screen acquisition process executed in steps S201 to S204 is executed once, the service screen may take the configuration of a structural menu represented by a plurality of pieces of HTML data, which makes it possible to execute reacquisition of the service screen on the basis of operation of the HTML browser by the user. That is, it is possible to adopt a configuration in which the same processing as that of steps S201 to S204 is repeatedly executed, thereby allowing various service screens to be provided to the DMP from the AS of the IPTV service. The user on the DMP side selects an arbitrary content from content lists presented on various service screens.

Also in cases such as when the content provision process provided by the IPTV service is the Video on Demand service or when charging confirmation is made with respect to the purchase of a right to view or listen to content by the user, HTML data representing a confirmation screen is transmitted from the AS of the IPTV service to the DMP via the home IMS gateway.

The user can receive various services provided by the IPTV service while operating the service screen displayed on a display of the DMP and carrying out interactive processing.

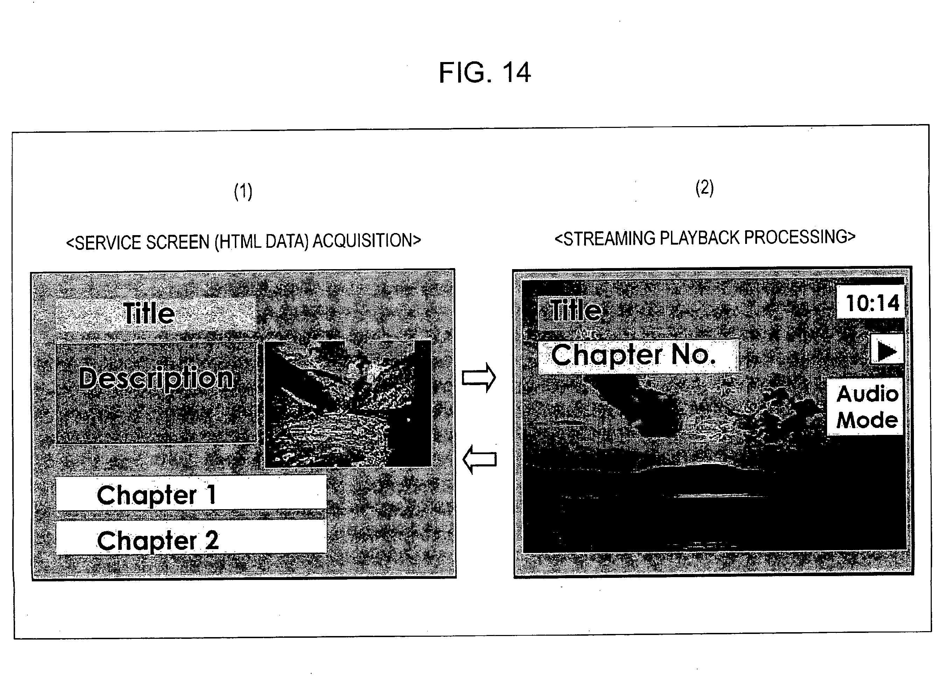

Fig. 14 shows an example of service screen and streaming playback screen provided to the DMP from the AS of the IPTV service and displayed on the display of the DMP.
Fig. 14(1) shows an example of service screen displayed on the display of the DMP in the service screen acquisition process of (B2) in steps S201 to S204 described with reference to the sequence diagram of Fig. 13.
Fig. 14(2) shows an example of screen displayed on the display of the DMP during the subsequent content streaming process. That is, this represents an example of the display screen of a content playback apparatus when the (B4) content screening process described with reference to Fig. 10 is being performed.
It should be noted that the following two processing screens shown in Fig. 14, that is,
(1) Service Screen, and
(2) Content Streaming Screen,
can be switched over as appropriate by a user operation, and the service screen presentation, and the content streaming process can be repeatedly executed.

While the embodiment described above is directed to a processing example in which the scheme of Presentation specified by UPnP DA is used, the same processing is possible also in the case of a configuration that uses the scheme of an HTML browser (HTML Browser) specified by the CEA-2014 standard, for example.

The CEA-2014 standard will be briefly described. The CEA-2014 standard is a standard for Web-based protocol and framework, and is a standard for a remote user interface using a UPnP network and the Internet. The CEA-2014 standard is a standard that defines a mechanism necessary for providing a user interface under the control of a remote device connected via a network or the like, for example. The basic process of a device providing a user interface is a process conforming to UPnP device architecture (v1.0) as a specification with respect to the UPnP network and in-home UPnP. The CEA-2014 standard also permits remote display processing of a user interface provided by the Internet service of a third party with respect to an in-home UPnP device, and specifies various UI functions used in TVs, mobile phones, and portable devices. It should be noted that the CEA-2014 standard is configured as a standard that includes specifications to meet the specific requirements of CEA-2027-A that is an UI standard for a home network.

In a device in which an HTML browser (HTML Browser) specified by the CEA-2014 standard is implemented, the same processing as the processing described with reference to Fig. 13 is realized through the acquisition of a service screen using the HTML browser (HTML Browser). In this case, the UPnP device class (UPnP Device class) of the home IMS gateway is a remote UI server (Remote UI server), and HTML data according to the HTML protocol specified by the CEA-2014 is used.

### [2. Description of Functions Applied to IPTV Service]

In the foregoing, description has been made of the configuration in which, in an open Internet connection environment that is not dependent on such infrastructure as an access line to the Internet or gateway, an existing DLNA device is applied to enable viewing or listening of content provided by an external server that is located outside the home network such as an IPTV service. Hereinbelow, functions used for receiving IPTV services from an external server by a device within the home network will be described in the following order of topics.
2-A. Function of IPTV Service Recipient Client
2-B. Function of IMS (IP Multimedia Subsystem)
2-C. Function Used in Network Configuration

### [2-A. Function of IPTV Service Recipient Client]

First, the function of an IPTV service recipient client will be described. As described above with reference to Fig. 3, the following devices are present within the home network 210:
the residential gateway (RG: Residential Gateway) 211 as a network connecting device through which a device within the home network connects to the IP broadband network 221 and which is used as a bridge;
the home IMS gateway 212 that executes processing with respect to a device within the home network 210 (for example, a content playback device such as the TV (DMP) 213) to enable use of services provided by a server that is located outside the home network; and
the TV 213 as a digital media player (DMP: Digital Media Player) that is a client device that receives and plays back content.
These devices may be configured as physically separated individual devices or as a single device.

That is, the home network 210 may take various device configuration settings. It should be noted, however, that in such various possible device configurations, it is required that one of the devices be equipped with the function necessary for receiving IPTV services.

A single information processing apparatus or each of a combination of a plurality of information processing apparatuses connected within the home network as a client basically includes a communication section that executes communication processing via a home network, and a data processing section that executes a process of receiving a content provision service provided by an external server through the application of mapping information that sets an external server located outside the home network as a virtual home network device. Hereinbelow, a function that becomes necessary or effective for the information processing apparatus connected within the home network to receive IPTV services, that is, the function of an IPTV service recipient client will be described.

The function required for an IPTV service recipient client to receive IPTV services is an IPTV terminal function. The IPTV terminal function is a function required for a logical end point of IPTV services. For example, in the configuration example shown in Fig. 3, each of the RG 211, the home IMS gateway 212, and the TV (IPTV) 213 executes a part of this IPTV terminal function. With these devices each executing a part of the IPTV terminal function in accordance with their role, services provided from an external server can be received and presented on a device within the home network, for example, the TV (DMP) 213 shown in Fig. 3. Further, although not shown in Fig. 3, services from an external server are provided to other home network devices to also execute such processing as storage, printing, and display.

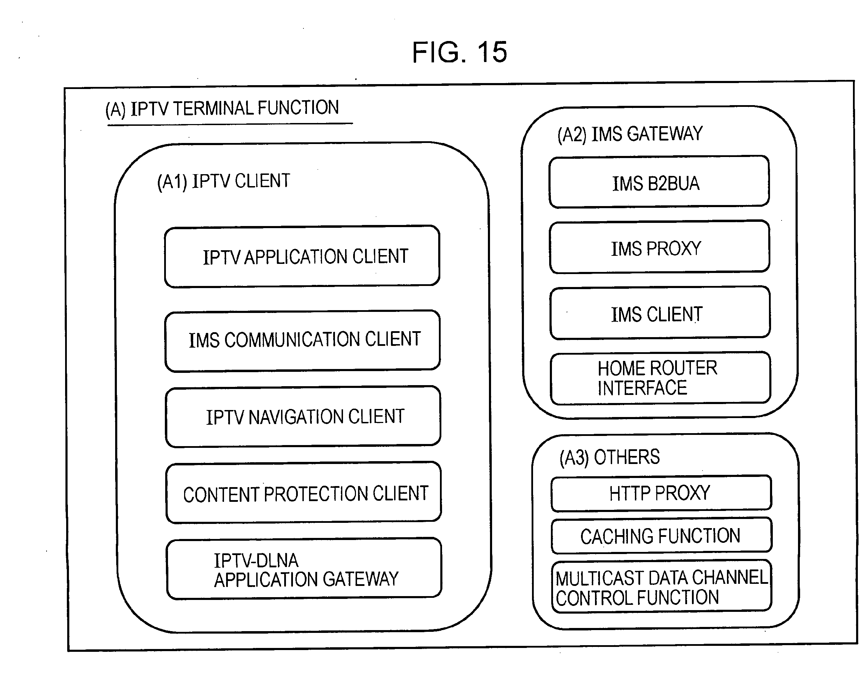

Fig. 15 shows the components of the IPTV terminal function that is a function required for receiving IPTV services. As shown in Fig. 15, the IPTV terminal function can be divided into the following components.
(A1) IPTV Client
(A2) IMS Gateway
(A3) Others
Hereinbelow, functional elements included in these respective components will be described.

### (A1) IPTV Client

The IPTV client is a component that ensures that IPTV services can be reliably received by an IPTV device, for example, the TV (DMP) 213 shown in Fig. 3. As shown in Fig. 15, the IPTV client has the following subcomponents as functional elements.
IPTV Application Client
IMS Communication Client
IPTV Navigation Client
Content Protection Client
IPTV-DLNA Application Gateway
Hereinbelow, these functional elements (subcomponents) will be described.

The IPTV application client is a component that receives a media signal and sends it to a display system. For instance, the IPTV application client receives a command from the user via a remote control, and executes processing according to the command. Specifically, the IPTV application client performs, for example, display of EPG (Electronic Program Guide), channel designation and changing using the EPG, and the like.

The IMS communication client is an IMS application set used for distributing message information such as messages and video data, other service information based on the IMS not related to the IPTV, and the like.

The IPTV navigation client is used for downloading EPG (Electronic Program Guide), a content list corresponding to VoD (Video on Demand), and other metadata and displaying them on a dedicated GUI for content selection.
The IPTV navigation client executes integration processing of other metadata or the like from sources such as the broadcast TV and the DLNA home network.
The content protection client executes protection of content provided by the IPTV service, for example, encryption processing for protecting the copyright of a content owner, management of an encryption key, and the like.

The IPTV-DLNA application gateway executes such processing as receiving media and EPG (Electronic Program Guide) from an IPTV client, for example, converting them into a format usable on a DLNA device, and transmitting the EPG (Electronic Program Guide) or the like via a network.

The IPTV-DLNA application gateway acts as a SIP (Session Initiation Protocol) client, and executes registration processing for other home devices connected to the home network. For example, the IPTV-DLNA application gateway executes registration of family members or devices.

### (A2) IMS Gateway

Next, the functional elements of the (A2) IMS gateway shown in Fig. 15 will be described. In the configuration shown in Fig. 3, these correspond to the functions the home IMS gateway 212 has. The home IMS gateway 212 is a component that connects a device within the home network to the IMS network, and executes mediation of messages between a device within the home network and an apparatus outside the home network by performing conversion between various signal protocols as required.

As shown in the drawing, the home IMS gateway includes the following functional elements (subcomponents):
IMS B2BUA;
IMS Proxy;
IMS Client;
GBA Client; and
Home Router Interface.
Hereinbelow, these functional elements (subcomponents) will be described.

The IMS B2BUA functions as an inter-working unit between a pure SIP client and the IMS system, and executes such processing as translation between SIP messages and IMS messages and message transfer.
The IMS proxy simply sends a message without performing message translation like the B2BUA, and executes routing processing, mapping processing of an IP address (local and global) to a port number, and the like.
The IMS client executes a client registration process (IMS registration process) through the application of client identification information or the like. Further, the IMS client supports processing such as authentication, and IPSec security connection setup with the CSCF.
The home router interface function provides a router function such as provision of a NAT function. For example, the home router interface function acquires a P-CSCF address by a SIP server DHCP option [DHCP-SIP] or by a DNS look-up for a SRV record, and executes such processing as opening and closing of a control signal port specified by UPnP and a port for unicast media stream.

### (A3) Others

In addition to the following components described above:
(A1) IPTV Client
(A2) IMS Gateway,
   the IPTV terminal function has the functional elements (subcomponents) of
(A3) Others shown in Fig. 15:

HTTP Proxy,
Caching Function, and
Multicast Data Channel Control Function.
Hereinbelow, these functional elements (subcomponents) will be described.

The HTTP proxy is an intermediate program that executes processing according to the specification of [HTTP] protocol, and acts as both a server and a client for the purpose of making a request on behalf of another client (HTTP client). This HTTP proxy can intercept HTTP GET sent to the outside, for example, and cache and use data that can be referred to by the requested URI. Further, the HTTP proxy acts as an HTTP client, and executes data retrieval based on the requested URI and the like.

The caching function is used for caching data that has been received by a client by unicast download or multicast. The caching function executes a caching process of temporarily recording such data as web pages (EPG and other IPTV menu), images, and metadata.
The caching function is used for, for example, minimizing the interaction waiting time for the user, minimizing the amount of unicast download from the IPTV application and control function. The caching function can be directly accessed from a client, and in cases where the IPTV client and the caching function are physically separated apart from each other within the same network, an event such as generation of new cache data, for example, can be notified to the IPTV client by the cashing function in accordance with the definition of DLNA by using the GENA protocol.

The multicast data channel (MDC) control function is a function that interfaces between the caching function and an application installed on the client, and includes a multicast data channel (MDC: Multicast Data Channel) insertion function. The MDC insertion function receives content requests to the MDC from various applications, and distributes content by multicast via a multicast channel.

The multicast data channel (MDC) control function identifies requests from various applications by tags. For example, in the browser executed on the client side, acquisition of EPG becomes possible by making a request while designating an EPG page tag. The MDC control function filters the incoming MDC, and sends an MDC object together with the tag being applied for to each application.

It should be noted that the multicast data channel (MDC) control function includes an MDC proxy, and if the MDC proxy is registered with a specific number of requests related to a given object such as an EPG page, it is possible to request the MDC control function to place this EPG page into the MDC. That is, the same data can be distributed to a plurality of clients by multicast, and it is possible to eliminate the necessity of data request from each client via a unicast channel.

### [2-B. Function of IMS (IP Multimedia Subsystem)]

Next, description will be given of the function of the IMS (IP Multimedia Subsystem) used for receiving IPTV services from an external server by a device within the home network. That is, the function of the IMS network 230 shown in Fig. 3 will be described.

As described above, the IMS is based on the IP technology, and is highly compatible with the Internet infrastructure of a fixed communication system. With a functional element called CSCF (Call Session Control Function) based on SIP (Session Initiation Protocol) specified by RFC-3261 of the IETF (The Internet Engineering Task Force) at its core, the IMS is configured by such functional elements as a home subscriber subsystem (HSS: Home Subscriber Subsystem) and an application server (AS: Application Server).

The IMS network 230 shown in Fig. 3 has the CSCF 231, the HSS 233, and the AS (IPTV) 233 as these functional elements, and provides services with respect to the mobile phone 260 via the mobile phone network 240.

The CSCF 231 performs user registration and session set-up control on the basis of SIP (Session Initiation Protocol). Further, the CSCF 231 executes activation of necessary service processing in accordance with user profile setting registered in the HSS 232. The HSS 232 has a database for the management of user IDs used in the IMS, the management of the profile of services to which each user subscribes, the management of authentication information, the management as to whether or not each IMS service can be used, and user movement management. The AS 233 is a server that executes each individual service processing, and is activated by the CSCF 231 in accordance with the service subscription status of each user to provide services to the user.

As described above, in the IMS, for example, a user with a registered user ID makes access to the CSCF 231 by using a client device to perform terminal (client) registration and session set-up control, and performs activation of necessary services in accordance with the user profile setting registered in the HSS 232. The ASS 233 actually performs each individual service processing.

For the IPTV viewing and listening service, the AS of the IPTV service set in the IMS network 230 is used. The AS (IPTV) 233 shown in Fig. 3 corresponds to the AS executing the IPTV service. In actuality, the AS (IPTV) 233 executes services with respect to the user terminal in corporation with an IPTV service (IPTV Service) executing entity, that is, the IPTV service 250 as a content providing entity.

The IPTV service 250 has the EPG server 251, which is a server providing EPG (Electronic Program Guide) as a program information guide such as a content list, and the video server 252 that is a server providing video content. The content list provision service and content provision service with respect to the user terminal are realized through cooperation between the respective servers and the AS (IPTV) 233 of the IMS network 230.

As described above with reference to Fig. 3, the main functional part of the IMS (IP Multimedia Subsystem) includes the CSCF (Call Session Control Function) 231, the home subscriber subsystem (HSS: Home Subscriber Subsystem) 232, and the application server (AS: Application Server) 233. The CSCF 231 performs user registration and session set-up control on the basis of SIP (Session Initiation Protocol), and executes activation of necessary service processing in accordance with user profile setting registered in the HSS 232. The HSS 232 has a database for the management of user IDs used in the IMS, the management of the profile of services to which each user subscribes, the management of authentication information, the management as to whether or not each IMS service can be used, and user movement management. The AS 233 executes services with respect to the user terminal in corporation with an IPTV service (IPTV Service) executing entity, that is, the IPTV service 250 as a content providing entity.

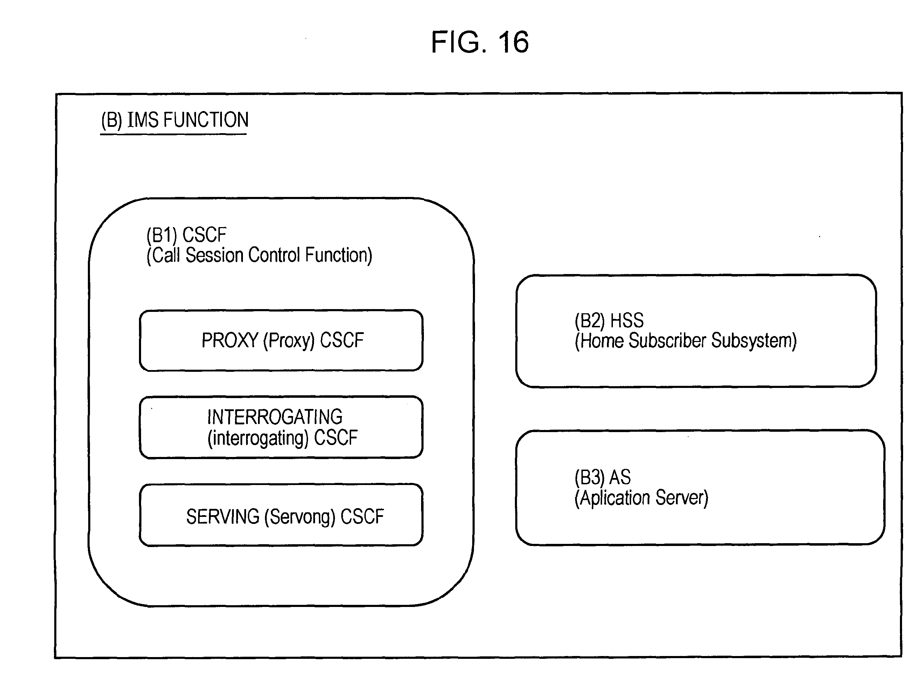

Fig. 16 is a diagram showing the following main functions of the IMS (IP Multimedia Subsystem).
(B1) CSCF
(B2) HSS
(B3) AS
Hereinbelow, the functions the (B1) CSCF, the (B2) HSS, and the (B3) AS have will be individually described.

### (B1. CSCF)

As shown in Fig. 16, the CSCF (Call Session Control Function) is divided into three logical entities, that is, a proxy (Proxy), an interrogating (Interrogating) CSCF, and a serving (Serving) CSCF.

The proxy (Proxy) CSCF serves as, for example, the first point of entry from a client within the home network serving as an IMS terminal, for example, the home IMS gateway 212 shown in Fig. 3. The proxy CSCF uses a key acquired from the serving CSCF to establish IPSec security association with a client within the home network serving as an IMS terminal, for example, the home IMS gateway 212 shown in Fig. 3.

With regard to each SIP message protected by IPSec communication coming from a terminal, for example, the home IMS gateway 212 shown in Fig. 3, the proxy CSCF verifies the integrity of the message and decodes it. For example, if the message is encrypted, decoding is performed by decryption. When decoding succeeds, the proxy CSCF executes checking of a client identifier and the like.

The interrogating (Interrogating) CSCF executes an interrogation or the like with respect to the HSS, for example, and acquires subscriber information (user profile and the like) to support registration processing. Further, the interrogating CSCF also executes processing with respect to SIP messages and determination of the billing path.

The serving (Serving) CSCF is the contact point with the home network, functions as a SIP registrar, and functions as a SIP server that keeps a binding between the user location and the recorded user SIP address. The serving CSCF performs such processing as acquiring from the HSS an AKA authentication vector (AV) used for the authentication of a client and the user profile/service profile. The serving (Serving) CSCF executes client authentication processing by using the IMS AKA protocol, and after the authentication succeeds, provides a key included in the AKA authentication vector (AV) to the proxy CSCF.

Further, the serving (Serving) CSCF inspects all the SIP messages between it and an IMS terminal, for example, a client, and determines the message path. This process can be executed as a process that takes into consideration a trigger rule/event based on the user service profile acquired from the HSS.

### (B2. HSS)

The home subscriber subsystem (HSS: Home Subscriber Subsystem) retains IMS subscriber information, and a list of client (user) information related to user profiles or the like. It should be noted that in the client, a private user identity (IMPI) and a public user identity (IMPU) are set as a plurality of pieces of identification information, and user information is recorded and managed in association with at least one of these pieces of identification information.

For example, an IPTV service subscriber profile is bound with the IMPI as client (user) identification information, and includes a service profile corresponding to each client. The service profile includes more than one public user identity (IMPU), core network authentication information (option), and more than one filter reference information, and the like.

By using the filter references retained by the HSS, the above-described serving CSCF determines whether or not setting a path for AS (Application Server) is appropriate, whether or not this is required with respect to a certain SIP request, or the like, and carries out filtering. It should be noted that information to be applied to a filter is stored and notified for each AS with respect to each user. For example, with respect to the IPTV, the HSS retains information related to the IPTV service providing entity and service identifier, and carries out filtering on the basis of these pieces of information. The HSS also performs generation of an AKA authentication vector (AV) used during a normal IMS registration procedure.

### (B3. AS)

Another element of the main function of the IMS (IP Multimedia Subsystem) is the IMS application server (AS). The IMS application server (AS) has the following IPTV functions.

### *Service Discovery Function

Function of determining the location of the access point for the IMS AS that provides IPTV services.

### *nPVR (Network Personal Video Recording) Function

Function of recording reception data on behalf of the user, and function for billing, authentication and provision of other services related to the nPVR function.

### *Participation Function

Function of residing in the communication path to execute carrying out of various services, billing, and the like.

### *Control Function

Function of executing termination of SIP traffic, media stream setup adjustment, recording of information set in the end user, logging, or the like, billing from the IPTV service, authentication and processing of other services, delegation of these services and functions to an external device connected to the IMS network, and the like.

### [2-C. Functions used in Network Configuration]

Next, description will be given of functions used in the network configuration for receiving IPTV services from an external server by a device within the home network. The functions used in the network configuration include the following functional elements.
(C1) Media Server
(C2) Transcoding Function
(C3) Home Router
These functions can be arranged so as to be distributed across the network. For example, the functions of the (C1) media server and the (C2) transcoding function may be configured within the IPTV service 250 shown in Fig. 3, or may be set so as to be independent with respect to another network connecting device. In the configuration shown in Fig. 3, the (C3) home router is provided in a device within the home network 210, and is provided in, for example, in the home IMS gateway 212. Hereinbelow, description will be given of the processing of these functional elements,
(C1) Media Server,
(C2) Transcoding Function, and
(C3) Home Router.
   Then, description will be further given of
(C4) Details of Communication Processing via Network.

### (C1. Media Server)

The media server is the most important component of a media player, and executes, for example, storage and outputting of VoD (Video on Demand) content, retention of content for network personal video recording (nPVR) executed on each client as a client-specific content recording process, and the like. Further, the media server performs media stream processing necessary when performing trick plays such as slow-motion, fast forward, rewind, and skip chapter in VoD (Video in Demand), for example. VoD (Video in Demand) content is inputted to the media server from a content management system.

### (C2. Transcoding)

The Transcoding function is a function of executing conversion and encoding of data corresponding to SD (Standard Definition) representing standard image quality and HD (High Definition) representing high image quality. For example, by using the standard SIP SDP negotiation by the SIP session set-up, the client can negotiate with the IPTV service providing server about the stream coding mode or the like, and receive data coded in a format adapted to the client. The transcoding function is required to execute processing that takes compatibility in terms of the screen size, resolution, and the like of the client into consideration by executing coding while also taking into consideration the encoding mode that can be used by the network and the bandwidth that can be used by the stream path.

### (C3. Home Router)

In many cases, a home network is connected to a distribution network by a home router that provides a NAT/NAPT (network address translation/network address port translation) function. The home router can be classified into two profiles of full support and limited home router. For example, to receive IPTV services, it is preferable to adopt a configuration that supports the following capabilities:
* UPnP IGD;
* IP multicast passthrough, IGMP proxy, and IGMP SHOPPING;
* Qos (Quality of Services) support assigned with a priority including a mapping from DSCP to a layer-2 priority tag (802.1 p, WMM); and
* Relay according to parameters by the DHCP server function

### (C4. Details of Communication Processing via Network)

Next, description will be given of the details of network communication using the respective functions described above, that is,
(C1) Media Server,
(C2) Transcoding Function, and
(C3) Home Router.

### (Communication and Session Setup)

In communication processing via a home router, for example, NAT (network address translation) and NAPT (network address port translation) are used. NAT is used for translating a private address into a global address, and NAPT is used for translation between many network addresses and TCP/UDP ports. These processes may be executed by the home router or by the NAT/NAPT router on the network.

For example, SIP messages between an IMS client such as the home IMS gateway 212 within the home network 210 shown in Fig. 3 and the proxy CSCF in the CSCF 231 within the IMS network 230 are transferred by using IPSec. If a NAT/NAPT router is present between them, the UDP Encapsulation of IPsec ESP packets [ESP] is used.

To support multicast streaming distribution via a home router, the NAT/NAPT router also includes an IGMP (Internet Group Management Protocol) proxy and an IGMP snooping functionality. In the case where the home router is equipped with an NAT/NAPT routing functionality, this is managed by the IMS gateway. In order for the IGMP snooping function to operate property, an IGMP membership report must be created by a device wishing to receive IP multicast packets. For example, the IGMP membership report for multicast streaming is created not by the IMS gateway but by the IPTV client.

### (Use of SNTP (Simple Networh Time Protocol))

A client within the IPTV system, for example, the home IMS gateway 212 or the TV 213 shown in Fig. 3 requires accurate time control to within 0.1 seconds for purposes such as setting a time stamp and starting recording. In the IPTV system, the client implements a system network time protocol client [SNTP]. The SNTP client can receive a time signal by a defined multicast channel.

### (Protocol)

The media protocol used for media (program) communication in the IPTV service is required to provide real-time audio/video streaming transport and control function on the media plane. For example, the following protocols are used.

### *MPEG-2TS

All media streaming of IPTV broadcast TV and VoD services complies with the MPEG transport stream (MPEG-2TS). MPEG time stamp is used for media synchronization.

### *RTP (Real-time Transport Protocol)

MPEG-2TS packets are transferred by RTP protocol conforming to RFC 3550 and RFC 2250.

### *RTCP (Real-time Control Protocol)

RTCP can be applied to both the media server and the client as an option. The RTCP protocol conforms to RFC 3550 with respect to either unicast or multicast. To achieve compatibility, both implementations with and without RTCP support are assumed for all the media servers and clients. For example, while the media server can send a sender report, the client cannot respond by a receiver report. Further, RTCP information can be ignored by SDP prior to streaming.

### *FEC (Forward Error Correction)

Although occurrence of packet loss in the IPTV network is not frequent in comparison to the current Internet, when executing data transmission at a high bit rate (for example, HD streaming), robust transport is required. As the reference for packet loss rate, "packet loss rate of 1 or less per 2-hour content" is used. 2-hour HD content includes about 10M-IP packets, and hence it is required that the packet loss rate be 10-7 or less.
In order to maintain the quality of audio/video, if the packet loss rate is larger than the above defined rate, the loss of packet can be recovered. The IPTV adopts forward error correction (FEC) in performing error correction. To achieve compatibility, FEC is sent by another IP port from the original RTP stream. The FEC transport format is based on RFC 2377 and its extension. FEC information is described in SDP so as to enable another version to be made in the future.

### *RTSP (Real-time Streaming Protocol)

All the media servers and clients support RTSP (RFC 2326) to realize playback control including trick plays such as slow-motion, fast forward, rewind, and skip chapter. TCP is used for transport of RTSP. RTSP is not used in the case of multicast.
In the IPTV system, the client establishes a media session using the SIP protocol, and after the session set-up, RTSP for playback control is used.

### (Format and Distribution of Media Content)

For the media codec of video content, MPEG-2 Part 2 and MPEG-4 Part 10 (also known as AVC or H. 264) are used. The distribution of media such as TV programs can be managed by a dedicated media server after the setup of a session between the client and the server. The transcoding and coding of the distribution data are also executed via a media distribution network.

### (Data Transmission/Reception Processing by Unicast Streaming)

For example, in the VoD (Video on Demand), EPG acquisition, or the like, a unicast stream is set up by browsing upon request from the client. For example, when the user on the client side selects a VoD title, SIP-invite that identifies a stream is sent from the client to a media server (for example, the IPTV service 250 shown in Fig. 3) having the desired content by using a protocol such as RTSP, by means of the IPTV control function on the client side.

When preparations for initiating a session are complete, the IPTV control function of the client responds to SIP invite from the client, and stream is initiated by RTSP PLAY from the client directly with respect to the media server or via the IPTV control function acting as an RTSP proxy.

Unicast stream is used in, for example, nPVR (Network Personal Video Recording) or VoD (Video on Demand). As for the unicast stream of IPTV, MPEG-2 or MPEG-4 Part 10 frames are encapsulated as an MPEG-2 transport stream, and then set as RTP packets. The RTP packets are transferred by UDP/IP.

### (Data Transmission/Reception Processing by Multicast Streaming)

Multicast streaming is usually used for realizing viewing and listening of TV broadcast. There are the following two options for resource reservation in multicast.
(a) Resource request made by a proxy CSCF from SIP SDP
(b) Resource request made from IP edge from IGMP (IP-edge device is the first IP node between an IP backbone network and the home network which is located at the upstream edge of an access and integrated network.)

In the scenario (a) mentioned above, when the user starts viewing and listening to TV from a specific IPTV provider for the first time (browsing EPG to check which channel can be used), for example, the home IMS gateway 212 or the TV 213 as a client shown in Fig. 3 executes SIP invite with respect to the AS 233 of the IMS network 230 shown in Fig. 3 or the IPTV control function of the IPTV service 250, and acquires resources that can be used from the network. In the process of receiving from an external server a content list corresponding to content that can be provided by the external server, on the basis of the provision of a user profile or client profile with respect to the external server, the client executes a process of acquiring a content list corresponding to a channel selected in accordance with the provided profile.

Resource ID as an identifier for available resources is described in EPG metadata. When a resource is allocated, to join the corresponding multicast group, the client sends an IGMP-join (IGMP joining) message specified by IGMP (Internet Group Management Protocol). The multicast group to join is retrieved from EPG by a linking mechanism. In the process of receiving from an external server a content list corresponding to content that can be provided by the external server, on the basis of the provision of a user profile or client profile with respect to the external server, the client executes a process of acquiring a content list corresponding to a channel selected in accordance with the provided profile.

For example, when the user on the client side switches between different channels belonging to the same IPTV service provider and having the same resource ID, additional SIP message transmission is not executed. This is to avoid excess latency in channel switching/zapping. Channel switching is executed by sending IGMP-leave (IGMP leaving) for an old channel, and IGMP-join (IGMP joining) for a new channel. However, when the user switches over to a channel with different resource requirements, the client notifies a change in session parameters, and sends SIP UPDATE to the IPTV control function to enable the proxy CSCF to change resource allocation. When a resource is changed, the client transmits an IGMP join message for a new multicast group. As described above, the client executes SIP message transmission according to SIP (Session Initiation Protocol) in a case where channel switching accompanies service provider switching, and does not execute SIP message transmission in the case of channel switching for content provided by the same service provider.

In the above-mentioned scenario (b), the channel changing operations are the same, except for that a SIP update message is not necessary for changing of channels with different resource requirements. Further, all resource requests are made by an IP-edge device as a result of an IGMP report. When resources are not sufficient for a channel change, no multicast binding is performed. In the scenario (b), the purpose of a SIP session is not resource management but rather service monitoring.

The client includes a function of limiting the IGMP channels that the user is permitted to join in accordance with the subscriber profile retained by the HSS 233 shown in Fig. 3, for example. Further, the network access node can execute, as an option, verification for permitting a subscriber to join a certain channel. While the communication mechanism of a multicast stream is basically the same as that of unicast, the source and the destination address at the IP layer are set in accordance with the media server and the multicast group.

The switching process between multicast distributed content and unicast distributed content executed on the client side will be summarized. At the reception of multicast distributed content provided by an external server such as the IPTV service 250 shown in Fig. 3, for example, the data processing section of a client device executes a process of transmitting an IGMP-join (IGMP joining) message to the external server or management server as a message according to IGMP (Internet Group Management Protocol), and when stopping the reception of multicast distributed content to start reception of unicast distributed content, transmitting an IGMP leave (IGMP leaving) message to the external server or management server as a message according to IGMP.

Further, the data processing section of the client executes reception of multicast distributed content in the case of TV broadcast reception, and executes switching to unicast distribution at the execution of VoD (Video on Demand). Further, in the processing of nPVR (Network Personal Video Recording) executed as a user-specific content recording process, the data processing section of the client executes switching to unicast distribution. The data processing section of the client also executes switching to unicast distribution also at the execution of trick plays as special content playback processing. It should be noted that the data processing section of the client executes switching to unicast distribution as processing for reception of a content list corresponding to the user profile or client profile.

### (Management of Service Quality)

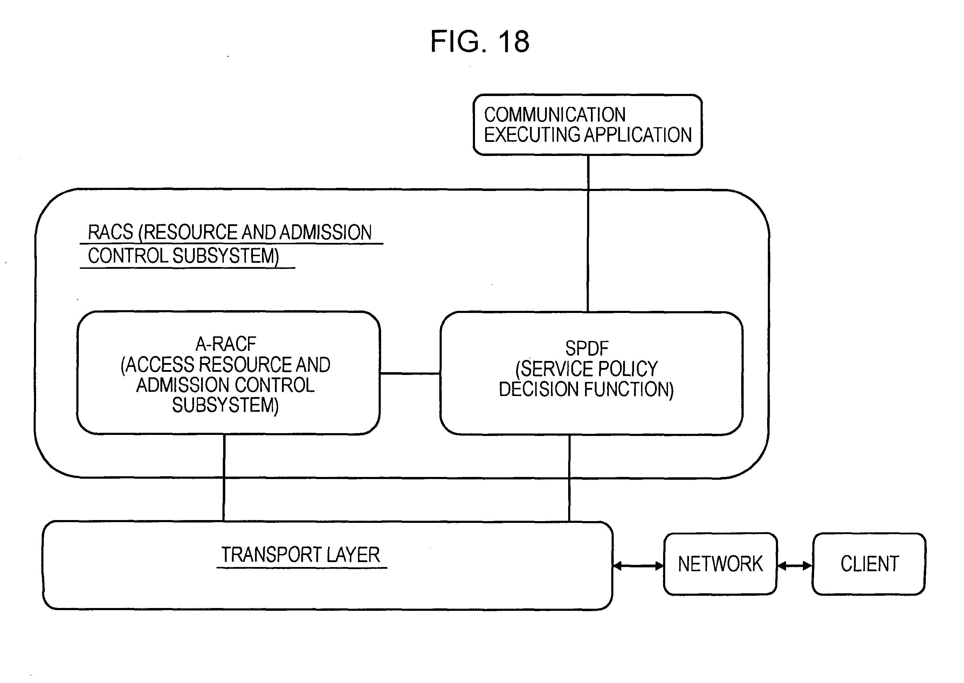

In the IPTV system, it is possible to manage the quality of services of all network segments, except for inside the home network. Traffic management is executed in communications via a network in the network configuration shown in Fig. 3. Quality management processing for communication data will be described with reference to Fig. 18. As shown in Fig. 18, Qos (Quality of Services) control/management in IPTV is executed on the basis of RACS (Resource and Admission Control Subsystem). The RACS is in charge of policy control, resource reservation, and admission control. This enables a service to request transport resources via RACS. The current range of RACS includes interconnection between a plurality of networks used in the IPTV system. RACS architecture includes SPDF (Service Policy Decision Function) and A-RACF (Access Resource and Admission Control Function).

A communication executing application (for example, the proxy CSCF of the CSCF 231 of the IMS network 230 shown in Fig. 3) maps the application layer QoS information (for example, parameters defined in SDP) into QoS information to be sent to the SPDF. The SPDF can be set as the logical entity of the proxy CSCF or another physical node. The information necessary for this processing is obtained from a SIP invite message that is sent from the client when the user requests a multicast channel or unicast session.

A-RACF located in the access network receives requests from the SPDF, and on the basis of these requests and policy information stored in the A-RACF, the A-RACF can accept or reject these requests for the transport resources within its control. This includes an IP edge and access node, and a response is generated in the end and provided to the application.

### (Failure of Resource Reservation and Failure Notification)

The RACS is responsible for resource reservation. Hereinbelow, failure of resource reservation, and failure notification processing will be described. When the RACS fails in resource reservation, that is, when the SPDF receives a reservation failure notification from the A-RACF, as a communication error code notification process, the SPDF returns Experimental-Result-Code AVP to the proxy CSCF as the communication executing application together with the following values.
*In the case of a failed resource reservation, INSUFFICIENT_RESOURCES
*In the case where a resource reservation could not be successfully modified, MODIFICATION_FAILURE

The proxy CSCF as the communication executing application maps the received error code to a SIP error code, and sends it back to the terminal (client). That is, SIP INVITE or SIP UPDATE must be rejected. It should be noted that for [SETUP] of this processing, "Precondition Failure" SIP status code can be used.

### (Prioritization of Communication Data)

For example, the prioritization of communication data within the home network can be performed on the basis of priority marking. This approach is in accordance with the DLNA guidelines. For example, a mapping rule between the type (traffic type) and priority (priority [DLNA]) of communication data is set, and the priority of communication data is determined on the basis of this rule.

### [3. Specific Processing Examples of IPTV Services]

Next, specific processing examples of IPTV services will be described in the order of the following two parts.
3-1. Specific Processing Example of Communication Processing
3-2. Specific Processing Example of Various Services

### [3-1. Specific Processing Example of Communication Processing]

In the IPTV service, media as content such as a program is distributed via the IP network, and IMS is used for identity (identifier) management, authentication, certification, and the like. The IPTV system uses the IMS to ensure that data communications be handled by a reliable, authenticated, and certified method. In the IPTV service, SIP is used in the distribution of a media stream, and SIP is used also for executing other functions. The advantage of using the IMS is that all SIP messages automatically pass through the IMS proxy. This means that the content and header of a message can be used for automated interaction such as the setting of proper quality of service, for example.

The IPTV architecture is designed so as to allow interconnection with the DLNA communication converted to SIP as well. In other parts of the system, at the time of interaction with the components of the content control function, for example, the IPTV application function receives SIP signal communication from the IPTV control function, and converts it to another protocol (such as HTTP). These processes are primarily performed by the application server (AS) of the IMS.

Hereinbelow, as specific examples of the deployment of IPTV services, the following three deployment scenarios will be described.
3-1-1. Deployment Scenario 1
3-1-2. Deployment Scenario 2
3-1-3. Deployment Scenario 3.
   Further, description will be also given of the following processes.
3-1-4. Network Connection Process on Client
3-1-5. Network Disconnection Process on Client
3-1-6. Service Discovery Process on Client

Although Deployment Scenarios 1 and 2 described below appear very similar to each other, they are actually very different. The major difference resides in that while in Scenario 1 it is assumed that each terminal owns a unique private IMS identifier (identity), in Scenario 2, terminals share the same private IMS identifier. Although this is not visible from the user's perspective, for the operator, this presents a significant difference in terms of network management method and subscription processing method. It should be noted that the scenarios described below are not exclusive from each other but are complementary, and can occur simultaneously in the same network.

### (3-1-1. Deployment Scenario 1: Case where Each Client is configured as IMS Terminal)

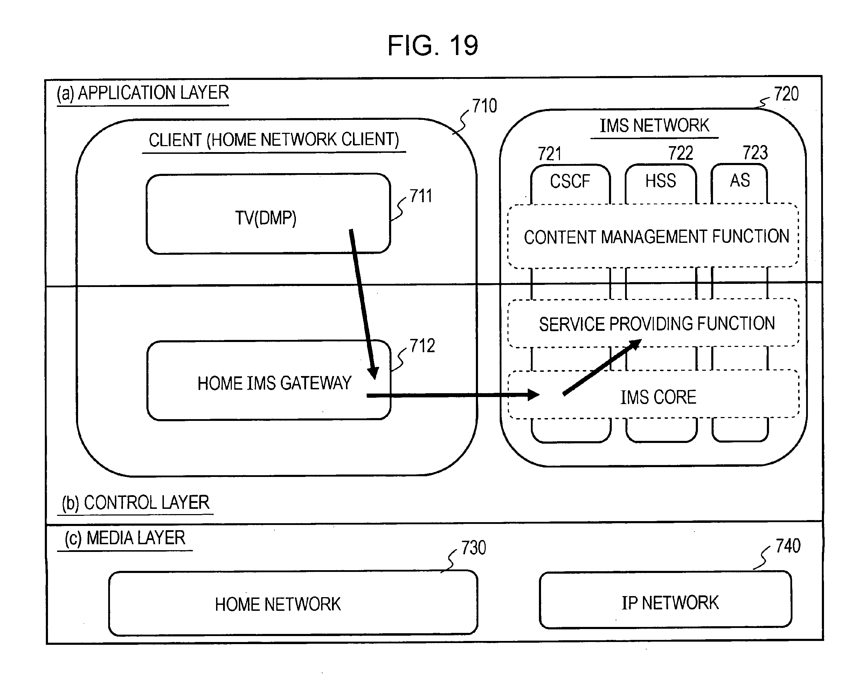

First, referring to Fig. 19 onwards, description will be given of an example of processing in the case where each client is configured as an IMS terminal.

Fig. 19 shows a client (home network client) 710, an IMS network 720, a home network 730, and an IP network 740. The client (home client) 710 includes a TV (DMP) 711 and a home IMS gateway 712 as components for receiving IPTV services. As described above with reference to Fig. 3, the IMS network 720 has a CSCF 721, an HSS 722, and an AS 723. Further, these components are depicted as being divided into a control management function that executes content control, a service provision function that performs service provision, and an IMS core portion that executes other controls such as registration processing and communication interfacing. Various processes are segmented into (a) application layer, (b) control layer, and (c) media layer, and performed as processes accompanying communication between respective layers.

First, Deployment Scenario 1 represents an example of processing in the case where there is no physical boundary between the TV (DMP) 711 and the home IMS gateway 712 within the client (home network client) 710 and these devices are integrated together. Fig. 19 shows an example of client registration processing. A registration request is sent from the TV (DMP) 711 as a client to the IMS core of the IMS network 720 via the home IMS gateway 712, and registration processing is executed in the service provision function.

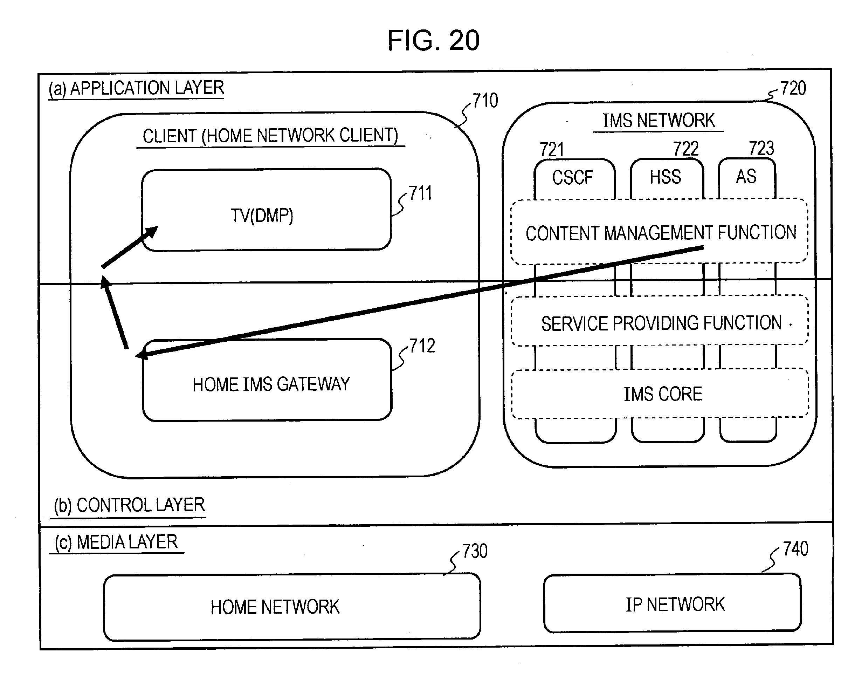

After the registration is made, the TV (DMP) 711 as a client sends [SIP SUBSCRIBE] to the IPTV control function included in the content management function of the IMS network 720. Then, as shown in Fig. 20, the IPTV control function of the content management function provides [SIP NOTIFY] containing the address of a multicast data channel and the URL of EPG to the client.

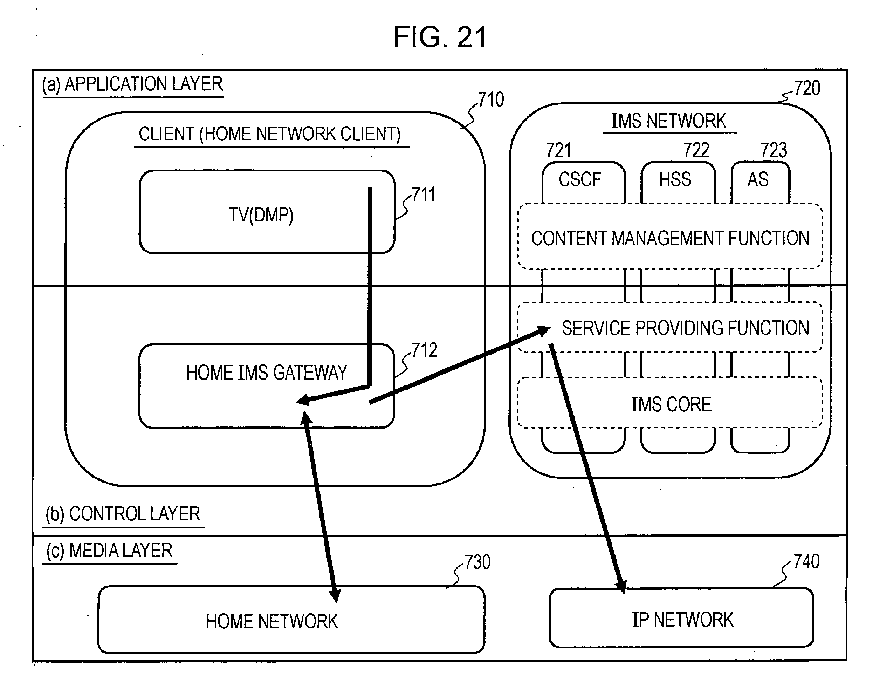

After receiving SIP NOTIFY, the TV (DMP) 711 as a client starts listening on a multicast channel. The first page of EPG is downloaded and displayed (in the case of a configuration where the user starts with EPG). Depending on the case, many pages are downloaded. After reception of EPG, the user selects the channel to watch. At this time, [T SIP INVITE] is sent to the IPTV control function, and this function supplements it and sets up proper QoS. The user then starts watching the channel, and switches between multicast channels. Fig. 21 shows the communication sequence when the channel selection processing by the user is executed.

When the user requests a stream, QoS is managed by the A-RACF (see Fig. 18) upon request from the proxy CSCF that uses information obtained from [SIP Invite], or upon request from an IP-edge device that uses knowledge of IGMP and multicast stream requirements. When the user switches between channels within a group of channels having the same resource requirements for an option in which the proxy CSCF requests access resources, the SIP message is not sent to the IPTV control function. However, when the user switches to, for example, a pay-per-view channel or to a channel within a group having different resource requirements, the IPTV control function must receive a notification because the P-CSCF can change the necessary resource conditions. In an option in which the IP-edge device requests an access to the resources, the SIP message becomes necessary only when the user switches to the pay-per-view.

### (3-1-2. Deployment Scenario 2: Case where Client is SIP Client but not IMS Client)

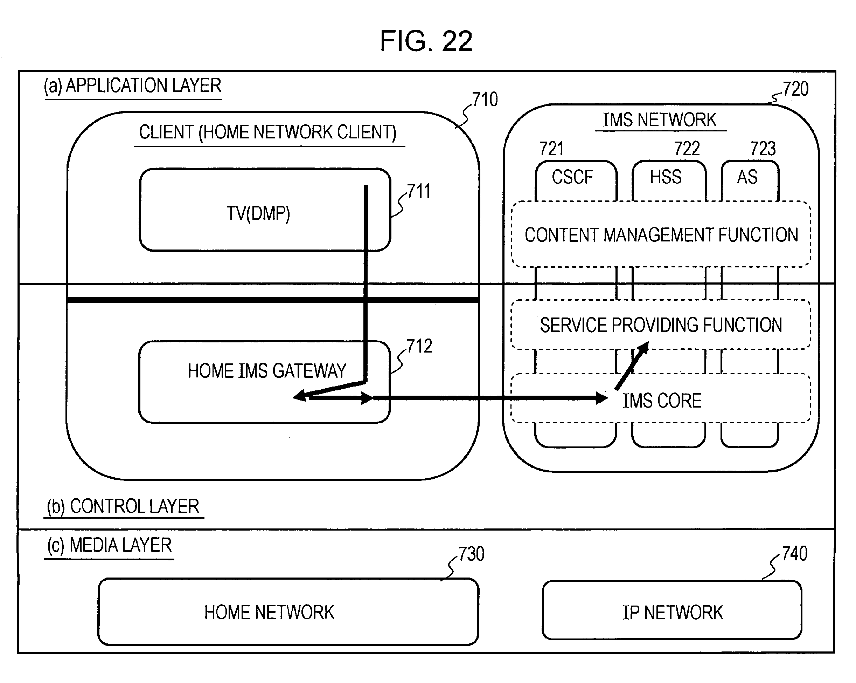

Next, in Deployment Scenario 2, description will be given of a case in which, as shown in Fig. 22, the TV (DMP) 711 as an IPTV client and the home IMS gateway 712 are physically divided from each other and are hence separate devices that are not integrated together. In the IPTV client, there is no separate ISIM (IP Multimedia Services Identity Module). The ISIM of IMS GW is shared by all the clients.

In this case, the home IMS gateway 712 is used as a proxy. Although the TV (DMP) 711 as an IPTV client directly registers in the IMS core, the IMS gateway 712 passes messages to the IMS core. Control information is passed by using SIP via the home IMS gateway 712, and media is directly distributed from the media server (within a content provider domain) to the IPTV client. IMS identification information (IMS PUID) is required to access services. The flow in this case is basically the same as the follow in Deployment Scenario 1, the main difference being that the registration is made via the home IMS gateway 712. The user acquires EPG and media stream in the same manner as in Scenario 1.

### (3-1-3. Deployment Scenario 3: Case of DLNA-IPTV Interconnection)

When the home network uses DLNA, it is necessary to bridge between SIP communication in the IPTV system and HTTP communication in the DLNA system, and between media distribution by IP (using DVB encapsulation) in the IPTV system and media distribution based on HTTP in the DLNA system. For this purpose, there is a gateway that bridges between two different systems, that is, an IPTV-DLNA application gateway.

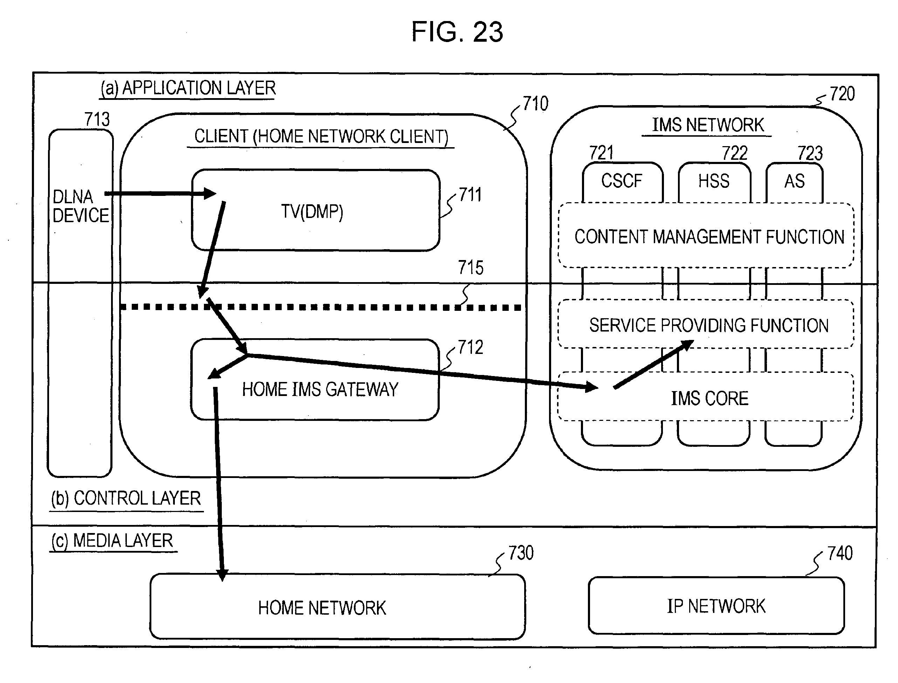

As shown in Fig. 23, when a DLNA device 713 requests a media stream from an IPTV service provider, the IPTV-DLNA application gateway connects to the home IMS gateway 712, and in the same manner as in Scenario 2, registers as a SIP client having no IMS client. For example, in the case shown in Fig. 23, the TV (DMP) 711 functions as the IPTV-DLNA application gateway. The IPTV-DLNA application gateway can also register when connecting to a network as a SIP client, as in the case where it does not have an IMS client.

This Deployment Scenario 3 can be realized by two methods. One is a method based on Deployment Scenario 1, and the other is realized as a process based on Deployment Scenario 2. A dotted line 715 shown in Fig. 23 means that the TV 711 as an IPTV client and the home IMS gateway 712 may either be physically integrated or separated. Hereinbelow, description will be given of five use cases of the IPTV and DLNA application gateway. From the viewpoint of the IPTV system, the IPTV-DLNA application gateway acts as an IPTV client.

Description will be given of the following specific examples of processing executed in this Deployment Scenario 3.
3-1-3a. 2BOX PULL
3-1-3b. 3BOX PULL
3-1-3c. Download
3-1-3d. 2BOX PUSH
3-1-3e. Upload
(3-1-3a. 2BOX PULL)

In the 2BOC PULL scenario specified by DLNA, that is, in a configuration in which processing is performed through one-to-one connection between DMS (digital media server) and DMP (digital media player), the IPTV-DLNA application gateway functions as a DLNA digital media server (DMS) that implements a UPnP AV media server (UPnP device). The IPTV-DLNA application gateway converts the format and protocol of media such as an EPG/VoD content list or other program content into the DLNA protocol in response to a request of the DLNA digital media player (operated by the user).

(3-1-3b. 3BOX PULL)
   In the 3-1-3b. 3BOX PULL scenario specified by DLNA, that is, in a configuration in which processing is performed through connection between DMS, DMP, and DMC (digital media controller), as in the use case of 2BOX PULL, the IPTV application gateway functions as a DLNA digital media server. However, there is a difference from the 2 BOX PULL scenario. The user operates the DLNA digital media controller (DMC) to browse EPG/VoD content, and causes a digital media renderer to play video content.
(3-1-3c. Download)

In download processing, the IPTV application gateway functions as a DLNA digital media server as in the use case of 2BOX PULL. The difference from 2BOX PULL is that a download controller (+DN+) can download video content provided by DMS. Although content cannot be outputted to the IPTV-DLNA application gateway, instead, content is downloaded in response to a request (for a VoD service, for example).
(3-1-3d. 2BOX PUSH)

In the use case of 2BOX PUSH specified by DLNA, that is, in the use case of 2BOX PUSH in which processing is performed through one-to-one connection between a controller having a content distribution function and a digital media renderer (DML) having a playback function, the IPTV-DLNA application gateway functions as a DLNA Push controller (+PU+) that implements a UPnP control point for a UPnP AV renderer.

Generally, the user operates a client device and browses a content list corresponding to EPG/VoD of the IPTV service, and the selected video content can be played by a DLNA digital media renderer by a method in which a DLNA Push controller controls the DLNA media renderer to transmit video streaming provided by the DLNA Push controller of he IPTV-DLNA application gateway.
(3-1-3e. Upload)

In upload processing, the IPTV-DLNA application gateway functions as a DLNA upload controller (+UP+) that implements a UPnP control point for a UPnP AV server (UPnP device). Generally, the user can browse an EPG/VoD content list of the IPTV service by operating a client device. A DLNA digital media server stores selected video content provided by the DLNA upload controller of the IPTV-DLNA application gateway.
(3.1.4. Network Connection Process on Client)

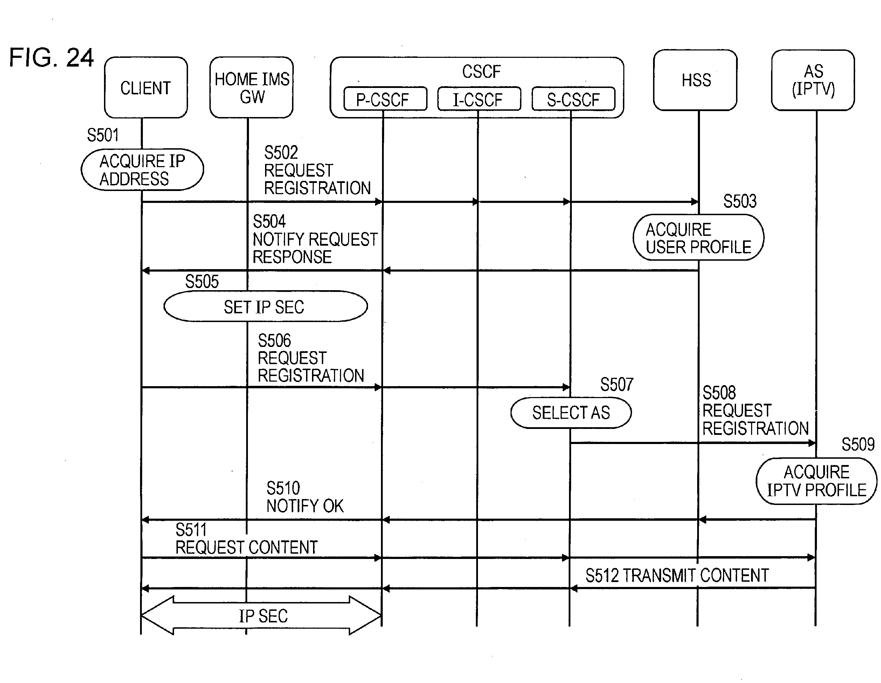

Next, an example of network connection process for a client to receive IPTV services will be described with reference to Fig. 24 onwards.

Fig. 24 is a sequence diagram showing an example of network connection process for a client. Fig. 24 shows, in order from the left side, a client corresponding to the TV (DMP) shown in Fig. 3, and a home IMS gateway, and further a CSCF, an HSS, and an AS (IPTV) as components of the IMS network, for example. It should be noted that as for the CSCF of the IMS network, the proxy CSCF (P-CSCF), the interrogating (Interrogating) CSCF (I-CSCF), and the serving (Serving) CSCF (S-CSCF) are shown individually.

First, the client acquires an IP address in step S501, and outputs a registration request in step S502. The registration request is notified by the home IMS gateway to the proxy CSCF (P-CSCF), interrogating (Interrogating) CSCF (I-CSCF), and serving (Serving) CSCF (S-CSCF) of the CSCF as a component of the IMS network. In step S503, user profile acquisition from the HSS is executed by the S-CSCF, and in step S504, a request response notification is made to the client.

Thereafter, in step S505, a setting is made to allow IPsec communication between the client and the proxy CSCF (P-CSCF) of the CSCF as a component of the IMS network, and subsequent communications are executed in accordance with IPSec. In step S506, a registration request for an IPTV service is outputted from the client, and this is received by the serving CSCF (S-CSCF) of the CSCF as a component of the IMS network. In step S507, AS selection processing is performed, and in step S508, a registration request is made to the selected AS.

The AS (IPTV) acquires an IPTV profile in step S509, and makes a registration completion notification to the client in step S510. On the basis of the reception of the registration completion notification, the client outputs a content acquisition request to the AS in step S511, and acquires content from the AS in step S512.

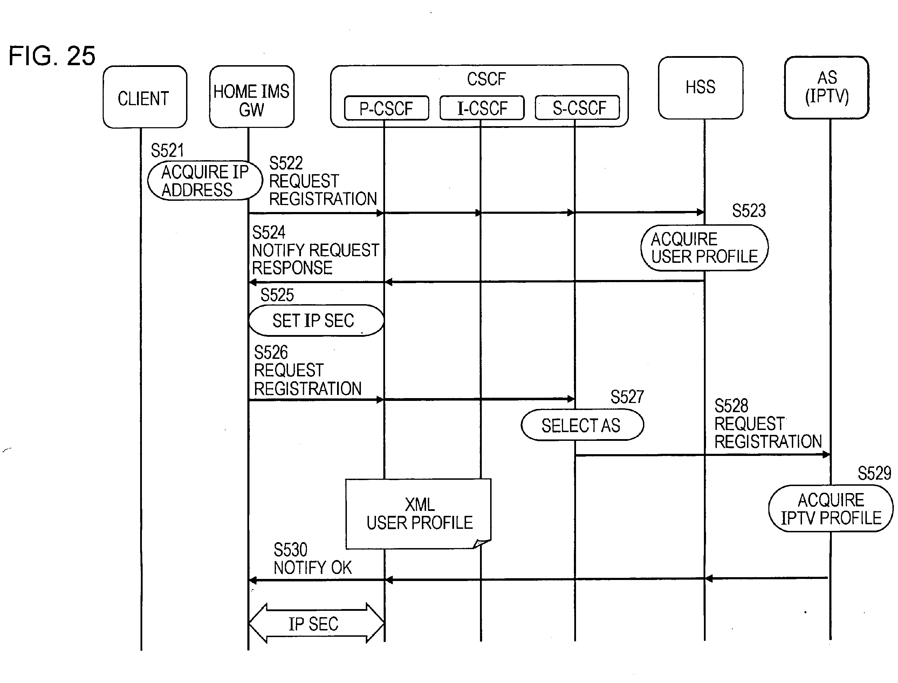

Fig. 25 is a sequence diagram of a case in which registration processing by the home IMS gateway is performed, instead of registration processing by the client. First, the home IMS gateway acquires an IP address in step S521, and outputs a registration request in step S522. The registration request is notified by the home IMS gateway to the proxy CSCF (P-CSCF), interrogating (Interrogating) CSCF (I-CSCF), and serving (Serving) CSCF (S-CSCF) of the CSCF as a component of the IMS network. In step S523, user profile acquisition from the HSS is executed by the S-CSCF, and in step S524, a request response notification is made to the home IMS gateway.

Thereafter, in step S525, a setting is made to enable IPsec communication between the home IMS gateway and the proxy CSCF (P-CSCF) of the CSCF as a component of the IMS network, and subsequent communications are executed in accordance with IPSec. In step S526, a registration request for an IPTV service is outputted from the home IMS gateway, and this is received by the serving CSCF (S-CSCF) of the CSCF as a component of the IMS network. In step S527, AS selection processing is performed, and in step S528, a registration request is made to the selected AS.

The AS (IPTV) acquires an IPTV profile in step S529, and makes a registration completion notification to the home IMS gateway in step S530.

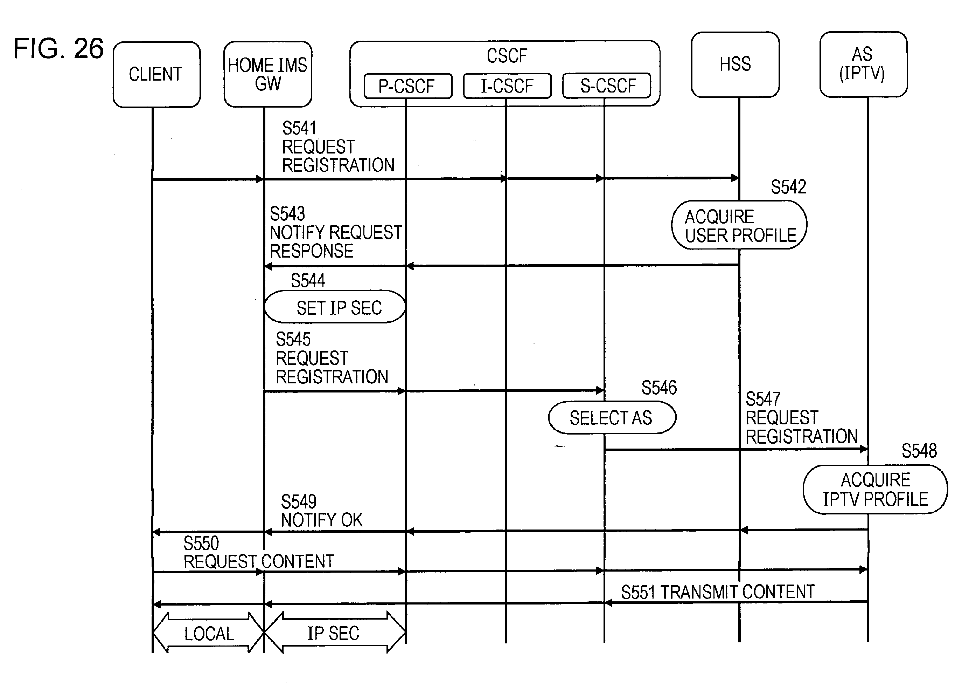

Fig. 26 shows an example of sequence in a case where the communication between the client and the home IMS gateway, and the communication between the home IMS gateway and the IMS network are executed individually. First, in step S541, the client sends a registration request to the home IMS gateway. The client address in this case is the address within the home network (@home). Upon receiving the registration request from the client, the home IMS gateway translates it into a global address (@op.com) before outputting the registration request to the IMS network. The registration request is notified by the home IMS gateway to the proxy CSCF (P-CSCF), interrogating (Interrogating) CSCF (I-CSCF), and serving (Serving) CSCF (S-CSCF) of the CSCF as a component of the IMS network. In step S542, user profile acquisition from the HSS is executed by the S-CSCF, and in step S543, a request response notification is made to the home IMS gateway.

Thereafter, in step S544, a setting is made to enable IPsec communication between the home IMS gateway and the proxy CSCF (P-CSCF) of the CSCF as a component of the IMS network, and subsequent communications are executed in accordance with IPSec. In step S545, a registration request for an IPTV service is outputted from the home IMS gateway, and this is received by the serving CSCF (S-CSCF) of the CSCF as a component of the IMS network. In step S546, AS selection processing is performed, and in step S547, a registration request is made to the selected AS.

The AS (IPTV) acquires an IPTV profile in step S548, and makes a registration completion notification to the home IMS gateway in step S549. This notification is made by the home IMS gateway to the client via the home network. On the basis of the reception of the registration completion notification, the client outputs a content acquisition request to the home IMS gateway in step S550. The home IMS gateway outputs this request to the AS, and in step S551, acquires content from the AS and transfers the acquired content to the client.

It should be noted that when making a setting that allows the provision of an IPTV service to the DLNA device 713 as described above with reference to Fig. 23, the home IMS gateway discovers the IPTV control function and receives EPG data, and then enables [IPTV DLNA app GW] for executing the interconnection between the DLNA device and the IPTV service. In the case where [IPTV DLNA app GW] functions as a UPnP device, that is, as a DLNA media server, IPTV DLNA app GW starts SSDP (Simple Service Discovery protocol) discovered by a UPnP control point [SSDP]. In the case where IPTV DLNA app GW functions as a UPnP control point, that is, as a DLNA Push controller, IPTV DLNA app GW need not to start SSDP of a UPnP device. Instead, in order to discover a UPnP device, IPTV DLNA app GW starts SSDP of the UPnP control point.

It should be noted that since the DLNA protocol, that is, device discovery and device control of the UPnP device architecture are based on session-less communication, there is no such concept as the UPnP control point establishing a session for performing communication with the UPnP device. During the period in which the digital media server, that is, the UPnP device can be used on the network, the digital media player and the digital media renderer, that is, the UPnP control point, can anytime request SOAP message for control related to media streaming and HTTP request, and the DMS of IPTV DLNA app GW must respond to the request within, for example, 30 seconds at the latest.

IPTV DLNA app GW can maintain a session to the IM core (CSCF) and the IPTV control function during the period in which the DMS of IPTV DLNA app GW can be used on the network. Upon termination of the session, IPTV DLNA app GW can reset the session when there are a SOAP request and HTTP request from the DMP. In a case where IPTV DLNA app GW acts as a Push controller, that is, as a UPnP control point, the duration for which the session is maintained can be learned.

When changing channels for IPTV service, an HTTP request for a channel change from a DLNA device is converted into IGMP (Internet Group Management Protocol). For example, the HTTP request is converted into IGMP (Internet Group Management Protocol) by the IPTV-DLNA application gateway, for example.
(3-1-5. Network Disconnection on Client)

Next, disconnection processing from an IPTV service will be described. In the IPTV recipient client, the display is turned off to allow disconnection of the client from the network. The disconnection processing from the IPTV service is executed in accordance with the following sequence, for example.

### (Step 1)

The client stops media reception.
It should be noted that in the case of multicast, IGMP leave (IGMP leaving) is used to leave the multicast stream related to the channel that the user has been viewing.

### (Step 2)

The client sends SIP BYE to an IPTV service providing entity, completing a SIP session related to media reception.
It should be noted that in the case of unicast, the IPTV service providing entity executes a RTSP TEAR DOWN command to stop RTP unicast flow, and closes the port if the media server is not aware of the SIP protocol.

### (Step 3)

The client sends SIP SUBSCRIBE to an IPTV service providing entity with Expire 0, and notifies the IPTV AS that a switch off is performed on the client side.

### (Step 4)

The client sends SIP REGISTER together with service expiration time, and cancels client identifier registration. It should be noted that reception data (GRUU: Globally Routable User Agent URI) from the serving CSCF is necessary for the acquisition of this registration information.

### (Step 5)

The client sends IGMP leave (IGMP leaving) for a control channel.

### (Step 6)

The client is disconnected from the IPTV service and the IMS.

### (Uncontrolled Disconnection from IPTV Service)

There are cases where disconnection is performed without executing the above-described sequence in the event of a power failure, for example. That is, there are cases where uncontrolled disconnection from an IPTV service occurs. In such a case, it is necessary to stop media flow such as a program being transmitted. In this case, however, processing must be performed while taking the following points into consideration.
(a) Media Flow Stoppage Process
(b) SIP Dialog of Network
These points will be described below.

### (a) Media Flow Stoppage Process

When the client is receiving multicast media streams, the only method for stopping these media streams, it is possible to apply the default timeout of IGMPv3 (225 seconds as the group membership interval according to [IGMP]).
In the case of unicast transmissions, most of unicast media transport mechanisms involve a process of receiving feedback information, and time-out time is set for this feedback information, enabling stoppage processing using this time-out information.

### (b) SIP Dialog of Network

All SIP states on the network have a normal default expiration value of 3600 seconds. This state is related to SIP REGISTER, SUBSCRIBE, and INVITE. The time-out mechanism clears the state of the IMS core (what happens when a reconnection occurs within the timeout period is that the timer increments after new registration).
The fact that the state of SIP is maintained active for 1 hour does not mean that traffic is sent for 1 hour. In fact, after the first NOTIFY not reaching the destination, the IMS core is notified that the client cannot be used, and the state is cleared accordingly.

### (3-1-6. Service Discovery Process on Client)

Description will be given of a process of performing discovery of an IPTV service provider in an IMS network. An IPTV service provider is discovered in the manner as described above, for example, and presented to the user, thus allowing selection by the user. It should be noted that this process is based on the precondition that the user has finished IMS registration.

The client first requests an IMS provider to attempt at discovering an IPTV service provider. When this fails, a request can be also made to an entity other than the IMS provider, for example, a route. The service provider discovery process begins with the discovery of the IPTV service provider that provides IPTV services.

While there are many models that can be used for discovering an IPTV service provider in an IMS network, these models are all based on the assumption that an application server (AS (IPTV)) having a capability of providing services exists in the network, and that the IPTV service provider can be identified by PSI, a feature tag, and other such SIP header.

The service provider discovery step is executed in accordance with a high-level description of "Transport of MPEG-2TS based DVB service over IP based network". SIP is used for communication of user authentication, and an IMS trust model for bootstrapping information, such as P-Asserted-Identity, is used. A SIP request using DVB IP del starting with service IPTV can become an IPTV provider. For example, SP CANAL+ is identified by the domain name, and a name corresponding to a service can be assigned for the service.

If this fails, the following process is executed.
If an IPTV server is not assigned when an IPTV application is started, the IPTV application uses an IPTV service bootstrap service or default address.
IPTV SIP dialog control signal communication is set by the IPTV client, and a path is set to the IMS network CSCF. This also means that the accurate address of a service need not be known because it can be added later. In the IMS network, it is necessary for CSCF to understand that the IPTV SIP dialog is an IPTV dialog, and set its path to IPTV CF (Control Function). This allows IPTV CF to provide discovered information related to service providers and provided services.

When information related to IPTV service providers (for example, SIP URI) is provided to the user by using a SIP dialog, and the user discovers the IPTV service providers, these providers are presented to the user. Then, the user can receive EPGs (or VoD and nPVR content lists or the like) provided by the IPTV service providers.

### (Service Discovery with UPnP)

Next, service discovery processing by UPnP will be described.
An IPTV client acquires the IP address of a proxy CSCF from the DHCP option of SIP, or uses the default IP address of the proxy CSCF described in an ISIM (IP Multimedia Services Identity Module) of an IMS operator.

Alternatively, the IPTV client discovers a home IMS gateway by using a UPnP discovery mechanism. The home IMS gateway implements a UPnP IMS GW service as a UPnP service. To discover the UPnP IMS GW service, the IPTV client performs processing using SSIP such as transmission of SSDP: M-Search or reception of SSDP. When the IPTV client discovers a UPnP IMS GW service, the IPTV client makes an acquisition request for the IP address and port of IMS B2BUA of IMS GW, and then the client initiates a SIP session with the IMS core via home IMS GW, and discovers an IPTV service.

The sequence of processing in the case of service discovery by a DLNA device described with reference to Fig. 23, for example, is as described below. In the case of 2BOX PULL, DOWNLOAD, and 3BOX PULL described above, the UPnP control point on the DLNA device can discover DMS by IPTV DLNA app GW. The service discovery of the IPTV service is executed by home IMS GW by the same method as that described above. The method of deploying a plurality of IPTV services differs depending on the vendor. For example, IPTV DLNA app GW can use a plurality of DMSs each corresponding to an IPTV service. To ensure that the user can select an appropriate DMS for an IPTV service, a name as a UPnP device which can identify the corresponding IPTV service is set for each DMS.
In the case of 2BOX PUSH and UPLOAD, IPTV-DLNA application GW controls the UPnP device of the DLNA device so that the IPTV-DLNA application need not to implement the UPnP device.

### [3-2. Specific Processing Example of Various Services]

Next, description will be given of various services executed in the IPTV service. Description will be given in the following order of topics.
3-2-1. TV Broadcast
3-2-2. nPVR (Network Personal Video Recording)
3-2-3. VoD (Video on Demand)
3-2-4. Content Filtering and Personalization
3-2-5. Interaction with TV
3-2-6. Profile Management
3-2-7. Adaptation Processing to Device Capabilities

### (3-2-1. TV Broadcast)

In the IPTV service, it is necessary to provide not only channel switching but also EPG browsing to the user as quickly as in TV broadcast. In order to minimize the user metadata waiting time due to EPG metadata transmission, EPG metadata related to programming for a certain period (for example, 8 days) is preloaded to the client, and in order to minimize the transaction and required bandwidth per 1 second of the EPG distribution system, service information, that is, TV channel information and EPG, that is, TV programming information is distributed via a multicast data channel. The IPTV content browser and IPTV navigation application of the client described with reference to Fig. 15 retrieve EPG metadata by using an MDC control function.

EPG metadata is also distributed via unicast. EPG metadata corresponding to basic programming corresponding to programs provided by the IPTV service, or EPG metadata of statistically popular programming is distributed via multicast. High-level EPG metadata with richer information such as other programming information and thumbnail images can be acquired by retrieval using unicast.

EPG metadata provided by the IPTV service provider is distributed periodically by a single multicast channel. The multicast channel control function of the client described with reference to Fig. 15 filters EPG metadata with a tag, such as channel subscription, in accordance with the client configuration, and stores the filtered EPG metadata in a memory. The IPTV service browser and the IPTV navigation application use the MDC control function for retrieving EPG data. The cycle time for transmitting EPG metadata differs depending on the information type.

Service information including the multicast channel address of a TV channel, and EPG metadata related to the content (program) being currently broadcast and the next content is transmitted frequently, for example, every 2 seconds. EPG metadata corresponding to today's programming is transmitted every 30 seconds, for example.

Since the schedule of TV programming of the broadcast TV service are determined in advance, the client simply need to retrieve new EPG metadata for future programming once every day. However, in order to notify the client of a change in programming schedule that occurs occasionally such as flash news or a prolonged baseball game, updates of EPG metadata are also distributed periodically, for example, every 2 seconds via a multicast data channel. In order to receive the updates of EPG metadata, when receiving a media stream via a multicast channel, the client monitors the multicast data channel of the EPG metadata.

The EPG metadata distributed via a multicast data channel is data containing basic information related to programming as program information. In order to acquire detailed information related to programming, and associated information related to programming linked to the basic programming information, the client can use a unicast request to the EPG server. Programming information includes text, video, audio, and the like, and the interaction with the user for such presentation of programming can be realized by a two-way unicast communication. It should be noted that for EPG or program information menu, a preview video stream can be displayed by setting a sub-screen in the display of the client on which the menu is displayed.

It should be noted that EPG can be presented in a manner personalized for each user or client, that is, in the form of unique EPG setting adapted to the user or client. For example, EPG personalization for each channel can be realized in the same manner as EPG is configured in accordance with channel subscription related to the user profile. Depending on the user profile, programming information related to a specific channel is not displayed. The display order of channels related to the EPG menu can be also personalized, that is, processed in a manner adapted to each user.

### Switching between TV Broadcast Channels

In the provision of IPTV services, packet buffering is performed on the client to ensure smooth playback processing, such as removal of jitter due to the network. The client accumulates data received from an IPTV service providing server until a certain threshold is reached, and executes processes such as decoding for playback thereafter. Further, there are cases where intraframe transmission/reception is executed via multicast for image reconstruction.

Further, in order to avoid depletion of bandwidth, at channel switching, termination processing of a previous old channel whose viewing/listening has been finished is also performed. This processing can be executed by IGMP leave (IGMP leaving) that is processing similar to IGMP join. This processing involves checking all IGMP aware nodes, and a comparison against a list of nodes receiving old multicast data is executed. When a certain node stops reception of multicast data, the processing of disconnecting the node from a multicast tree is performed.

To execute decoding and playback of received video stream on the client, it is necessary to collect many pieces of information from the received stream. These pieces of information are sent at a specific frequency. In particular, to start display of a new video feed, the decoder must wait until intraframes arrive in a video stream. The intraframes are each configured as a frame with sufficient information contained in itself in order to reconstruct a complete image. They are usually transmitted at a cycle of 0.5 to 5 seconds depending on the encoding type.

There are various delays that can occur in data communications in the IPTV service. For example, SIP interaction processing at the time of setting up a new stream can be a delaying factor. For example, processing related to SIP INVITE executed in the SIP interaction processing can be conceived as a delaying factor. Accordingly, reducing SIP interaction processing provides a measure for eliminating delay. Specifically, it is effective to adopt a setting in which a SIP dialog is created only when the characteristics of multicast streams vary between multicast channels. In accordance with this idea, a setting is provided such that when the client tunes to a normal broadcast channel, multicast transmission with stream characteristics is requested to establish a SIP session, and other multicast channel changes require only IGMP interactions without SIP mediation, replacement with a SIP dialog being performed only when received streams differ in characteristics. Further, SIP INVITE and IGMP join for new channel are sent. A delay that occurs in the IGMP setup can be mitigated by allowing a multicast channel to be used at a location as close as possible to the end user. However, this consumes more bandwidth in the access network.

Intraframe delay required for starting decoding of an MPEG stream is also a problem that needs to be improved. The intraframe delay can be eliminated by adopting a configuration in which intraframes are acquired by a pull mechanism from a point relatively close to the client in the network, or by providing intraframes to the client by an out-of-band mechanism.

### (3-2-2. nPVR (Network Personal Video Recording)

Next, description will be given of nPVR (Network Personal Video Recording) as a type of service that can be used in the IPTV service.

### Recording of nPVR

Content recording by nPVR (Network Personal Video Recording) can be started by various methods. The method varies mainly depending on the IPTV service provider.
*The simplest method of recording programming such as programs is to select a program from EPG and press a record button with a remote control owned by the user. Further, the time, date, and duration of the user's recording may be inputted as well.
Alternatively, a setting may be adopted in which all the programs provided to the client are recorded. This means that the IPTV service provider records all the programs, and stores them on a server for a period of time designated in advance. In this way, the user can view nPVR EPG that appears similar to the past normal EPG without being bothered by recordings.

What the IPTV architecture is required to support are an interface that identifies programming to be recorded, and an identification mechanism for achieving this by means of EPG. The link mechanism is set as the same as that of TV broadcast if possible, and as for the command communication for record processing, there can be used an RTSP RECORD command, or SIP INVITE to nPVR including details of recordings.

For example, an example of processing in the case where the user requests personal recording with respect to content being received and played back in the IPTV service is a trick play. For example, the client executes the nPVR recording function by pressing a pause button with a remote control, and then freezes the picture and executes IGMP leave (IGMP leaving) from a multicast channel. Further, the client stores content. It should be noted that data storage may be executed on the server. When the user wants to view the content again later, nPVR retrieval is executed to allow the content to be played back via an RTSP PLAY command.

As for the content list (table of contents) that can be used in nPVR, the same content format and metadata as those of EPG and VoD can be used. The same linking mechanism as that of TV broadcast must be used, expect for that as in the case of VoD, the linking is performed by the IPTV control function in order to identify a unicast source. nPVR content list retrieval is normally executed as HTTP GET. In order to allow retrieval of nPVR content that can be used by the client, the IPTV service provider provides a server-based retrieval function. The interfacing of retrieval pages completely depends on the service provider.

In the playback processing of content recorded by nPVR, selection of the target nPVR content is required first. Retireval is done by clicking on a link for the nPVR content list. Content retrieval is executed as a unicast stream. That is, a stream is initiated when the user presses "play" or clicks on a link for the content list.

The client device configuration adopted in the case of executing processing of nPVR (Network Personal Video Recording) executed as user-specific content recording processing is as described below, for example. An information processing apparatus as a client has a data processing section that executes reception processing of a content provision service provided by an external server through the application of mapping information that sets the external server located outside a home network as a virtual home network device. The data processing section performs processing control of nPVR (Network Personal Video Recording) which is executed as user-specific content recording processing with respect to content provided by the external server.

The data processing section executes reception processing of multicast distributed content when receiving TV broadcast provided by the external server, and executes switching processing to unicast distribution in the case of nPVR (Network Personal Video Recording) executed as user-specific content recording processing. When starting reception of unicast distributed content, an IGMP leave (IGMP leaving) message is transmitted to the external server or management server as a message according to IGMP (Internet Group Management Protocol).

Further, for nPVR (Network Personal Video Recording), the data processing section of the client can also request an external server or other such network connecting server to execute content recording by using the recording means of these servers. In this case, information required for recording such as recording content information and time information is provided to these servers. Further, in the process of receiving from an external server a content list corresponding to content for which nPVR (Network Personal Video Recording) can be executed, the data processing section of the client performs, on the basis of the provision of a user profile or client profile with respect to the external server, a process of acquiring a content list selected in accordance with the provided profile. Further, in executing nPVR (Network Personal Video Recording), the data processing section of the client executes a process of outputting content selection information in EPG (electronic program guide) or recording time designation information to an external server or management server. nPVR is executed through such processing.

The client is an information processing apparatus that receives content related to IPTV provided via a public network that is not a home network. The client includes means for setting an external server connected to a public network as a virtual home network device, and control means for controlling content recording or playback processing on the external server via the public network so that the external server functions as a personal video recorder that records or plays back user-specific content. Further, in order to realize a unicast for providing specific content only to a specific user, the control means of the client performs a process of controlling content playback processing on the external server via a public network. Further, the control means of the client performs a process of controlling content recording or playback processing on the external server via the public network so that the external server to function as a personal video recorder that records user content.

### (3-2-3. VoD (Video on Demand))

VoD (Video on Demand) is a specification for distributing content in response to a request from the user on the client side. VoD is basically executed via unicast. Insertion of an advertisement into content (media) distributed by VoD, or retrieval based on the advertisement can be executed in the same manner as in broadcast services or EPG.

The content list (table of contents) that can be used for VoD can be browsed on the client side as well. This content list (table of contents) is limited to only those contents that the user is allowed to view, that is, the filtered version can be browsed. While filtering can be executed within the network, in that case, the VoD content list must be unicast, or the client can use multicast for preloading the cache of the VoD content list. Acquisition of the VoD content list is partially the same as EPG information acquisition.

For retrieval of available VoD content, it is required that the client can execute an interrogation with respect to the network. Content retrieval is executed by content metadata.

To perform content playback by VoD, the client is required to select one available content that the user is permitted to view from the VoD content list, and output a content request. For example, upon designating a content from the content list, the link to the URI of the VoD service is activated and the IPTV control function processes the request, and it is verified whether or not the user has already purchased the content. If the content has not been purchased, charges related to the content are verified, and in other cases, the content request is rejected.

### (3-2-4. Content Filtering and Personalization)

Next, filtering and personalization of content executed in the IPTV service will be described. Filtering of content is a content selection process in which content provided to the end user on the basis of the end user's IMS and IPTV profiles and a set of subscribed channels is set only to one adapted to the user, and personalization is a process of selecting content provided to the user based on the user's profile. This includes, for example, a process of distributing messages and advertisements targeted to individuals based on user profiles.

Through content filtering, for example, only those channels for which the user have paid are displayed on the EPG or VoD list acquired by the user. Content filtering enables creation and display of EPG adapted to the profile of a log-in user. Upon log-in, the user profile is downloaded from a server storing the profile, for example, the HSS 232 of the IMS network 230 shown in Fig. 3 by using XCAP, and stored to the user device. As for VoD, content filtering is applied when creating a view of VoD provided by the server, or when receiving VoD metadata on the client. It should be noted that the user profile may be stored on the client as a user-side device in advance for use.

The user profile information on an external server or client device is presented to a server that provides content, and the content providing server executes content personalization of selecting and editing content on the basis of the user profile to create and provide content adapted to the user. Alternatively, such personalization processing may be executed on the client side.

Content personalization includes distribution of messages and advertisements targeted to individuals based on user profiles. These pieces of data designed for specific users are overlaid onto the screen by the user device, and displayed in the PinP (picture in picture) mode, for example. Personalization is executed by inserting a target advertisement as a show goes into an advertisement pause while watching a broadcast show or VoD content.
Interactivity can be also said to be one form of personalization based on the user profile. Information included in the interactivity data is displayed by the same means as that for individual messages or advertisements, that is, by using an overlay or dedicated window. Personalization is distributed via a dedicated unicast channel, or in the smallest multicast groups for a set of profiles (location information, age, sex, income bracket, and the like).

### (3-2-5. Interaction with TV)

Description will be given of interaction with a TV programming such as when the users on the client side send opinions or votes while viewing an IPTV service. For interactivity with television programming, data from users such as votes can be sent by the users (for example, via SMS). For example, votes are counted and used for creation of feedback information related to a program or the like.

It should be noted that some existing digital broadcast systems already support interaction with TV programming through a mechanism of inserting a trigger into an MPEG-TS stream and giving an interactive object such as HTML or BML at the timing of the trigger. While an interactive object is usually embedded in an MPEG-TS stream, it is also possible for a digital broadcast system to distribute an interactive object via a two-way communication channel separated from MPEG-TS stream distribution.

A mechanism using a browser applied to the IPTV service is used for interaction with TV programming. For example, reference information to an XHTML document representing interaction with programming is embedded in the metadata of program content. While the user is watching programming (program), the interactivity system calls up an IPTV service browser for interaction with programming (program). The XHTML document is distributed via a multicast data channel and unicast communication. The feedback of interaction is realized by the IPTV service browser by unicast communication.

### (3-2-6. Profile Management)

In the IPTV service, various profiles such as the user profile of a client are managed. Examples of profiles are described below.
*Service Profile related to Operator's Services and User Profile
Profiles of billing, user identifier, authentication vector used for authentication processing, and service trigger are stored and retained in the HSS 232 of the IMS network 230 shown in Fig. 3.
*User's Own Profile
The user's own profile is stored on the client device on the user side.
If the IPTV provider differs from the IMS provider, the IPTV provider can store a user profile specific to IPTV to its own database.
*IPTV Provider Profile
An IPTV provider profile as information related to the IPTV provider can be stored on the client side, and is also stored to the IPTV provider's own database.

The user profiles include, for example, SIP identifier, language, nationality, age, (those provided by the operator and those provided by the user), E-mail address, telephone number, and interests and hobbies (hobbies/preferences information), IPTV-specific parameters, and the like. These user profiles are used for service personalization. Specifically, setting and provision of user-specific data (my ...) are possible on the basis of the user's preferences. For example, setting of my channel, setting of start-up channel, and further my VoD, my Pay TV, personal mapping of buttons to channels, localized control, and the like can be executed on the basis of the user's preferences.

The IPTV provider profile includes, for example,
* Information about which channel the user can access, and
* Subscriber profile used for determining what the user is permitted to view and what the user is not permitted to view.

On the side of the client as an end user, user management and user profile management are executed. User management means that the user can add, change, or delete users in a domain, and user profile management means that the user can change information of the user profile.

The processing steps when the end user of a client performs user management are as follows.
1. The end user provides new user information to the HTTP portal.
2. Information is sent by the HTTP portal to the IMS network 230 (see Fig. 3) that executes user management, updating the HSS and the IPTV database.

User profile management executed by the end user of a client is executed by the following processing, for example.
1. New user profile information is inputted to the client device.
2. The client transmits data to a server that manages user profile information, for example, a preset profile outputting destination such as the HSS 232 of the IMS network 230 or the IPTV service 250 shown in Fig. 3, and registration and update processing is executed on the reception side of such data.
3. Each server that has executed information updating notifies the client and other relevant servers of the completion of data updating.
4. The client downloads the updated user profile.

It should be noted that the registration and updating of the user profile can be performed also via the IPTV service portal. In this case, the user profile is provided to the IPTV service portal from the client. Thereafter, the IPTV service portal transmits these pieces of data to a user profile management server (for example, the HSS 232 of the IMS network 230 or the IPTV 250 shown in Fig. 3).

As described above, the data processing section of the information processing apparatus as a client executes a process of receiving data from an external server as personalized data selected or edited on the basis of a user profile as user information registered in advance. The data processing section of the client acquires a user profile previously stored in a management server such as HSS, and provides the acquired user profile to an external server such as a content providing server. Further, the data processing section transmits the user profile that has been updated on the client device to the management server such as HSS, and executes update processing of the user profile stored in the management server.

The data processing section of the client executes a process of receiving, from an external server such as a content providing server, a content list, advertisement information, content corresponding to VoD (Video on Demand), or the like set as personalized data on the basis of the user profile, and displaying the data on a display section. It should be noted that as described above, the user profile includes information on at least one of the user's use language, nationality, age, address, telephone number, and hobbies/preferences information.
(3-2-7. Adaptation Processing to Device Capabilities)

Various devices can be set as the client, and the processing that can be executed by each client differs depending on the client. That is, the clients have diverse device capabilities. To ensure interoperability between these various clients and the IPTV service, a set of device capability profiles is designated, and the capabilities required of a client are specified.

In order for content distributed to a client to be played back on the client in a satisfactory manner, it is necessary to clarify the capabilities of that client. Examples of client device capabilities include the screen size, screen resolution, available memory size, and kind of the codec to be supported.

When the client device registers for a service for the first time, the description of the CSCF 231 device of the IMS network 230 is downloaded, and the downloaded description and its URI are recorded into the database or repository to be shared with other entities such as individual servers. It should be noted that if a global repository such as the W3C DCI repository can be used, that repository may be used.

There are cases where the adaptation processing of AV content to the client device requires selection of an appropriate content version. For example, adaptation processing of text content is realized by using transformation, combination, formatting (for example, XSLT), or the like corresponding to the version. An executing entity (for example, a target server or a proxy that performs transcoding) of adaptation processing executes the processing of receiving device capabilities, and adapting a document in accordance with a set of rules expressed in document metadata. This means that the content metadata must include rules related to the transformation to be applied, and also means that the service profile must include restrictions related to the applied transport, terminal, or the like.

As described above, in the content provision system having a content providing server and a content receiving client, the data processing section of the content receiving client executes a process of acquiring device information of the client, and transmitting and registering the device information into a database that is located outside the home network, for example, the home subscriber subsystem (HSS: Home Subscriber Subsystem) specified by the IP multimedia system (IMS). The content providing sever executes a process of acquiring this device information of the client registered in the HSS, and providing content adapted to the device to the client. Specifically, the device information includes device information on at least one of the screen size, screen resolution, available memory size, and kind of the codec to be supported on the client. The content providing server executes a process of acquiring these pieces of device information, and providing content that can be played back on the device to the client.

The present invention has been described above in detail with reference to specific embodiments. However, it is obvious that a person skilled in the art can make modifications or substitutions of the embodiments without departing from the scope of the present invention. That is, the present invention has been disclosed by way of examples, and should not be construed restrictively. The scope of the present invention should be determined by reference to the claims appended hereto.

The series of processing described in this specification can be executed by hardware, software or a composite configuration of both. If the series of processing is to be executed by software, the series of processing can be executed by installing a program recording the processing sequence into a memory of a computer built in dedicated hardware, or by installing the program into a general purpose computer capable of executing various processing. For example, the program can be recorded in a recording medium in advance. When installing the program into the computer from the recording medium, the program can be received via a network such as LAN (Local Area Network) and the Internet, and installed into the recording medium such as a built-in hard disk.

The various processing described in this specification may be executed not only time sequentially in the order as they appear in the description but may be executed in parallel or independently depending on the throughput of the device executing the processes. Further, the term system as used in this specification refers to a logical assembly of a plurality of devices, and is not limited to one in which devices of respective component devices are located within the same casing.

### Industrial Applicability

As described above, according to the configuration of the present invention, DMP as a content playback device that is a client device within the home network can receive and play back content from a content providing server within the home network. That is,_the home IMS gateway as the information processing apparatus according to the present invention executes communication with the content providing server, maps the content providing server as a virtual home network device, and upon reception of a device discovery request from a content playback apparatus within the home network, provides server information of the content providing server to the content playback device as device information indicative of a device from which services can be received. Further, at the time of executing switching processing of channels that provide content provided by an external server, it is possible to execute termination processing of an inactive channel that occurs due to the channel switching.

## Claims

1. An information processing apparatus comprising:
a communication section that executes communication processing via a home network; and
a data processing section that executes reception processing of a content provision service provided by an external server through application of mapping information that sets the external server located outside the home network as a virtual home network device,
wherein the data processing section is configured to execute termination processing of an inactive channel that occurs due to channel switching at the time of executing switching processing of channels that provide content provided by the external server.

2. The information processing apparatus according to Claim 1, wherein:
the data processing section is configured to execute a process of transmitting an IGMP leave (IGMP leaving) message to the external server or a management server as a message according to IGMP (Internet Group Management Protocol) if the terminated channel is for multicast distributed content.

3. The information processing apparatus according to Claim 2, wherein:
the data processing section is configured to execute a process of converting an HTTP request for a channel change from a DLNA (Digital Living Network Alliance) device into IGMP (Internet Group Management Protocol).

4. The information processing apparatus according to Claim 1, wherein:
the data processing section is configured to execute a process of acquiring a content list corresponding to a channel selected in accordance with a provided profile on the basis of provision of a user profile or a client profile to the external server, in a process of receiving from the external server a content list corresponding to content that can be provided by the external server.

5. The information processing apparatus according to Claim 1, wherein:
the data processing section is configured to execute SIP message transmission according to SIP (Session Initiation Protocol) if channel switching accompanies switching of service providers, and not to execute SIP message transmission in the case of channel switching for content provided by the same service provider.

6. An information processing method executed by an information processing apparatus, comprising:
a communication step of causing a communication section to execute communication processing via a home network;
a content receiving step of causing a data processing section to execute reception processing of a content provision service provided by an external server through application of mapping information that sets the external server located outside the home network as a virtual home network device; and
a channel controlling step of causing the data processing section to execute termination processing of an inactive channel that occurs due to channel switching at the time of executing switching processing of channels that provide content provided by the external server.

7. The information processing method according to Claim 6, wherein:
the channel controlling step includes a step of executing a process of transmitting an IGMP leave (IGMP leaving) message to the external server or a management server as a message according to IGMP (Internet Group Management Protocol) if the terminated channel is for multicast distributed content.

8. The information processing method according to Claim 6, wherein:
the channel controlling step includes a step of executing a process of converting an HTTP request for a channel change from a DLNA (Digital Living Network Alliance) device into IGMP (Internet Group Management Protocol).

9. The information processing method according to Claim 6, wherein:
the data processing section is configured to further execute a process of acquiring a content list corresponding to a channel selected in accordance with a provided profile on the basis of provision of a user profile or a client profile to the external server, in a process of receiving from the external server a content list corresponding to content that can be provided by the external server.

10. The information processing method according to Claim 6, wherein:
the channel controlling step executes SIP message transmission according to SIP (Session Initiation Protocol) if channel switching accompanies switching of service providers, and does not to execute SIP message transmission in the case of channel switching for content provided by the same service provider.

11. A computer program for causing an information processing apparatus to execute information processing, comprising:
a communication step of causing a communication section to execute communication processing via a home network;
a content receiving step of causing a data processing section to execute reception processing of a content provision service provided by an external server through application of mapping information that sets the external server located outside the home network as a virtual home network device; and
a channel controlling step of causing the data processing section to execute termination processing of an inactive channel that occurs due to channel switching at the time of executing switching processing of channels that provide content provided by the external server.
